Europäisches Patentamt

European Patent Office

Office européen des brevets

(19)

(11) Veröffentlichungsnummer: **0 248 935 B1**

(12) # EUROPÄISCHE PATENTSCHRIFT

(45) Veröffentlichungstag der Patentschrift:
**26.07.89**

(51) Int. Cl.⁴: **G 02 B 6/44**

(21) Anmeldenummer: **86108109.9**

(22) Anmeldetag: **13.06.86**

(54) **Kabel mit optischen Fasern zur Signalübertragung und Verfahren zu seiner Herstellung sowie Einrichtung zur Durchführung des Verfahrens.**

(43) Veröffentlichungstag der Anmeldung:
**16.12.87 Patentblatt 87/51**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
EP-A- 0 019 026
DE-A- 2 928 678
FR-A- 2 489 002
GB-A- 2 157 018

**Die Akte enthält technische Angaben, die nach dem Eingang der Anmeldung eingereicht wurden und die nicht in dieser Patentschrift enthalten sind.**

(73) Patentinhaber: **Kabelwerke Brugg A.-G., Klosterzelgstrasse 28, CH-5200 Brugg (CH)**

(72) Erfinder: **Capol, Bruno M. G., Im Moos 8, CH-5200 Windisch (CH)**

(74) Vertreter: **Steudtner, Werner, Dipl.-Ing., Lindenhof 5, CH-8604 Hegnau bei Zürich (CH)**

## Beschreibung

Die Erfindung bezieht sich auf ein Kabel zur Übertragung von Informationen mit einer Anzahl von optischen Fasern zur Signalübertragung mit Hilfe von im wesentlichen in Faserlängsrichtung geführten elektromagnetischen Strahlungen von Wellenlängen unter 1 mm, sowie auf ein Verfahren zur Herstellung dieses Kabels, und eine Einrichtung zur Durchführung des Verfahrens.

Kabel dieser Art sind allgemein unter den Bezeichnungen «Glasfaserkabel» und «Lichtleiterkabel» bekannt, die beide insofern nicht ganz korrekt sind, als das Fasermaterial von optischen Fasern zwar in der Regel Glas ist, jedoch auch andere spezielle Kunststoffe für optische Fasern verwendet werden können, und ausserdem die Signalübertragung über optische Fasern auch nicht mehr auf den Bereich des sichtbaren Lichtes beschränkt ist sondern sich einerseits bis in den Bereich der infraroten Wärmestrahlung und andererseits bis in den Bereich der unsichtbaren ultravioletten Strahlung erstreckt. Die derzeit allgemein gebräuchliche und auch hier verwendete Bezeichnung «optische Faser» ist dementsprechend im Sinne einer Faser zur Signalübertragung mittels in Faserlängsrichtung geführter elektromagnetischer Strahlungen ohne irgendwelche aus dem Begriff «optisch» herleitbaren Beschränkungen auf sichtbares Licht als Signalträger zu verstehen.

Kabel der eingangs genannten Art mit optischen Fasern zur Signalübertragung und die wesentlichen, bei der Konstruktion solcher Kabel zu erfüllenden Bedingungen sind beispielsweise aus den Literaturstellen «Introduction to optical fibre cables» (Pirelli Cable Review Nr. 26, Jul. 85, S. 1-6) und «Design considerations for optical cables» (Pirelli Cable Review Nr. 26, Jul. 85, S. 52-56) bekannt. Eine der wichtigsten Bedingungen für die Konstruktion eines solchen Kabels ist, dass die optischen Fasern vor jeder axialen Zugbelastung und auch vor stärkeren Krümmungen geschützt werden müssen. Gerade diese wichtigste Bedingung konnte jedoch bisher nur mangelhaft erfüllt werden bzw. blieb bei den bekannten Lichtleiterkabeln unter bestimmten, für die einzelnen Kabel unterschiedlichen ungünstigen Umständen oder dem Zusammentreffen mehrerer solcher ungünstiger Umstände unerfüllt, obwohl die Erfüllung dieser Bedingung eines vollständigen Schutzes der optischen Fasern vor axialen Zugbelastungen und stärkeren Krümmungen auf den ersten Blick keine besonderen Schwierigkeiten zu verursachen scheint, weil zumindest theoretisch axiale Zugbelastungen beispielsweise durch einen schraubenlinienförmigen Verlauf der optischen Faser bzw. eine Verseilung des Kabels und stärkere Krümmungen durch eine entsprechende Bewehrung des Kabels verhinderbar sind oder wenigstens zu sein scheinen.

Eine nähere Überprüfung zeigt jedoch, dass der ursprünglich für Glasfaserkabel vorgesehene schraubenlinienförmige Verlauf der Fasern keinen ausreichenden Schutz der Fasern vor axialen Zugbelastungen bietet, weil mit einem solchen Verlauf zwar bei Krümmungen des Kabels durch Verschiebungen von auf den Krümmungsinnenseiten befindlichen Faserabschnitten nach den Krümmungsaussenseiten zu ein Längenausgleich stattfindet und sich die axialen Zugbelastungen der Fasern bei Krümmungen des Kabels auf die für diese Verschiebungen erforderlichen, meist relativ geringen Zugbelastungen beschränken, bei einer thermischen Expansion des Kabels z. B. infolge Sonnenbestrahlung bei Freileitungskabeln hingegen in aller Regel axiale Zugbelastungen der Fasern auftreten, die zum Zerreissen der Fasern führen können, weil der thermische Expansionskoeffizient von Glas bekanntlich ausserordentlich gering ist und der thermische Expansionskoeffizient des gesamten Kabels daher in aller Regel wesentlich grösser als der thermische Expansionskoeffizient der Fasern ist, was bei einer thermischen Expansion des Kabels dazu führt, dass sich die Achslänge der Schraubenlinie des Faserverlaufes vergrössert und sich der Durchmesser des Zylinders, auf dem die Schraubenlinie verläuft, entsprechend dieser Achsverlängerung – abzüglich der geringfügigen Faserverlängerung durch die thermische Expansion der Fasern – verringern müsste, und eine solche Durchmesserverringerung deswegen nicht möglich ist, weil die innerhalb des Kabels vorgesehenen Führungsmittel zur Führung der Fasern auf einer schraubenlinienförmigen Bahn die Fasern in radialer Hinsicht abstützen und daher eine Verschiebung der Fasern nach dem Kabelzentrum zu verunmöglichen und zusätzlich infolge der ja nicht nur in Kabellängsrichtung sondern natürlich auch in Kabelquerrichtung erfolgenden thermischen Expansion des Kabels sogar eine Verschiebung der Fasern vom Kabelzentrum weg und damit eine Durchmesservergrösserung des Zylinders, auf dem die Schraubenlinie verläuft, und damit letztlich eine Verlängerung der Fasern erzwingen, die oberhalb der Bruchdehnung der Fasern liegt und daher zum Zerreissen der Fasern führt.

Diese Gefahr des Zerreissens der Fasern bei thermischen Expansionen des Kabels lässt sich auch nicht dadurch beseitigen, dass anstelle eines schraubenlinienförmigen Verlaufes der Fasern mit über die gesamte Kabellänge gleichbleibendem Drehsinn der Schraubenlinie nach Art der sogenannten Falschverzwirnung ein schraubenlinienförmiger Verlauf der Fasern mit längs des Kabels periodisch wechselndem Drehsinn der Schraubenlinie vorgesehen wird. Denn auch bei einem solchen Verlauf der Fasern ergibt sich natürlich bei einer thermischen Expansion des Kabels eine Achsverlängerung der Schraubenlinie mit periodisch wechselndem Drehsinn und damit die Tendenz zu einer Durchmesserverringerung des Zylinders, auf dem die Schraubenlinie mit periodisch wechselndem Drehsinn verläuft, weil eine Verschiebung der Bereiche des Drehsinnwechsels der Schraubenlinie in Umfangsrichtung des Kabels wegen der natürlich auch für einen schraubenlinienförmigen Faserverlauf mit periodisch wechselndem Drehsinn erforderlichen Führungsmittel nicht möglich ist, und da diese Führungsmittel die Fasern ebenso wie bei einem schraubenlinienförmigen Verlauf mit gleichbleibendem Drehsinn in radialer Hinsicht abstützen, führt die besagte Tendenz zur Durchmesserverringerung in Verbindung mit der sich tatsächlich infolge der thermischen Expansion des Kabels ergebenden Durchmesservergrösserung des Zylinders, auf dem die Schraubenlinie mit periodisch wechselndem Drehsinn verläuft, genau wie bei einem schraubenlinienförmigen Verlauf der Fasern mit gleichbleibendem Drehsinn zu einem Zerreissen der Fasern.

Auch die theoretisch denkbare Verwendung von Materialien mit anderen Expansionskoeffizienten für die optischen Fasern zur Verhinderung der Gefahr des Zerreissens der Fasern bei thermischen Expansionen des Kabels ist praktisch aus einer Reihe verschiedener Gründe nicht realisierbar. Hauptgrund ist zunächst einmal, dass keine für optische Fasern geeigneten Materialien mit grösseren Expansionskoeffizienten bekannt sind. Aber auch wenn solche Materialien bekannt wären, liesse sich diese Gefahr des Zerreissens der Fasern durch Verwendung von Fasermaterialien mit anderen Expansionskoeffizienten von Fasermaterial und gesamtem Kabel mindestens annähernd übereinstimmen, und die Erzielung einer solchen Übereinstimmung ist praktisch deswegen nicht möglich, weil der Expansionskoeffizient des gesamten Kabels je nach Aufbau des Kabels und je nach den für das Kabel verwendeten Materialien sehr verschieden sein kann und sich beispielsweise bei einem Fasermaterial mit relativ grossem Expansionskoeffizienten und einem Kabel mit relativ kleinem Expansionskoeffizienten wiederum eine beträchtliche Differenz der Expansionskoeffizienten ergeben würde, die in diesem Fall zwar nicht bei zu starker Erhitzung des Kabels, dafür aber bei zu starker Abkühlung desselben zum Zerreissen der Fasern führen würde.

Bei einem schraubenlinienförmigen Faserverlauf lässt sich also weder bei gleichbleibendem noch bei periodisch wechselndem Drehsinn der Schraubenlinie die Gefahr eines Zerreissens der Fasern mit Sicherheit ausschliessen, weil die Bedingung eines Schutzes der optischen Fasern vor axialen Zugbelastungen mit diesem in der Kabeltechnik bisher allgemein angewandten Konstruktionsprinzip der Verseilung jedenfalls dann, wenn das Kabel grösseren Temperaturbelastungen ausgesetzt ist — wie z. B. dem für Freileitungskabel vorgeschriebenen Betriebstemperaturbereich von −40° C bis +70° C — nicht erfüllbar ist.

Für bereits im Betrieb oder im Handel befindliche verseilte Kabel mit optischen Fasern bestehen daher relativ enge Grenzen für den zulässigen Betriebstemperaturbereich, die praktisch nur bei unterirdisch verlegten Kabeln eingehalten werden können, und ausserdem müssen die optischen Fasern bei verseilten Kabeln zusätzlich zu den strengen Temperaturbedingungen noch lose in relativ harten Röhrchen geführt werden, damit bei Krümmungen des Kabels die oben schon erwähnten Verschiebungen von auf den Krümmungsinnenseiten befindlichen Faserabschnitten nach den Krümmungsaussenseiten zum Längenausgleich stattfinden können, ohne dass hierfür grössere axiale Zugbelastungen der Fasern erforderlich sind, was bei einem Fehlen dieser relativ harten Röhrchen dann der Fall wäre, wenn die Fasern durch innere Pressungen des Kabels festgehalten würden und die besagten Verschiebungen daher nur gegen beträchtliche Reibungswiderstände möglich wären. Da die harten Röhrchen allen beim Betrieb und bei der Verlegung des Kabels möglichen inneren Pressdrücken des Kabels standhalten müssen und ausserdem zur Vermeidung von sogenannten Mikrobiegungen der Fasern an rauhen Oberflächen an der Röhrcheninnenwand auch noch mit einer aus einem hochfesten glatten Kunststoff wie z. B. Nylon bestehenden Gleitschicht versehen sein müssen, ist die Herstellung dieser relativ harten Röhrchen ausserordentlich aufwendig, so dass also verseilte Kabel mit optischen Fasern zusätzlich zu dem Nachteil einer geringen Temperaturbelastbarkeit noch den Nachteil eines relativ hohen Herstellungsaufwandes haben.

Dass diese entscheidenden Nachteile des Konstruktionsprinzips der Verseilung bei Kabeln mit optischen Fasern zu Versuchen führen mussten, durch Anwendung anderer Konstruktionsprinzipien für den Aufbau von Kabeln mit optischen Fasern zu einer Erfüllung der Bedingung eines vollständigen Schutzes der optischen Fasern vor axialen Zugbelastungen und stärkeren Krümmungen zu gelangen, liegt auf der Hand. So wurde beispielsweise in der britischen Patentanmeldung GB-A 2 122 767 vorgeschlagen, die optischen Fasern wellenförmig in Gummi einzulagern und eine Reihe von solchen mit wellenförmig verlaufenden Fasern versehenen Gummis zu einem Paket zu verbinden und dieses gegebenenfalls noch zu drillen. Dieser Vorschlag war aber nicht genügend durchdacht, weil ein wellenförmiger Faserverlauf nur dann einen Sinn hat, wenn die Faser ohne Schwierigkeiten bzw. ohne axiale Zugbelastungen in einen geradlinigen oder annähernd geradlinigen Zustand übergehen kann, und um zu einem solchen geradlinigen Verlauf zu gelangen, müssten die wellenförmig in Gummi eingelagerten Fasern den Gummi in der Ebene des wellenförmigen Verlaufes durchschneiden, und ein solches Durchschneiden wäre natürlich — wenn überhaupt — nur mit ausserordentlich hohen axialen Zugbelastungen möglich, vor deren Erreichung optische Fasern in aller Regel zerreissen würden. Das ist sehr leicht ersichtlich, wenn man einmal versucht, mit einem gespannten Stahldraht einen weichen Radiergummi zu durchschneiden (ohne Hin- und Herbewegen des Gummis in Drahtachsrichtung), denn bei einem solchen Versuch wird nicht der Gummi durchschnitten, sondern der Stahldraht reisst. Ganz abgesehen davon ist bei der Anordnung nach der besagten GB-A auch der Raumaufwand pro Faser mit etwa dem 1000fachen des Faservolumens entschieden zu gross.

Aus genau dem gleichen Grund wie bei der GB-A 2 122 767 hat auch bei dem Vorschlag nach der GB-A 2 157 018, die optischen Fasern in wellenförmige Nuten eines in Kabellängsrichtung wellenförmigen Bandes einzubringen und das Band dann um einen Kabelkern herumzuschlagen und anschliessend mit einem wendelförmig auf das herumgeschlagene Band aufgebrachten Folienband auf dem Kabelkern zu befestigen und das Ganze danach mit einer als Kabelmantel dienenden äusseren Schutzhülle keinen Sinn, denn auch bei dieser GB-A 2 157 018 können die optischen Fasern nicht in einen geradlinigen Zustand übergehen, weil die Wellenform der Nuten auch bei Dehnung des Kabels erhalten bleibt bzw. Maxima und Minima des Wellenverlaufes der Nuten bei beliebiger Dehnung des Kabels auf gleichen Winkelpositionen relativ zum Kabelkern verbleiben. Bei einem den Vorschlägen nach der GB-A 2 122 767 und der GB-A 2 157 018 ähnlichen, aus der französischen Patentanmeldung FR-A 2 509 480 bekannten Vorschlag ist ebenfalls ein wellenförmiger Faserverlauf vorgesehen, wobei jede einzelne Faser innerhalb einer Art Flachrohr mit zwei einander gegenüberliegenden ebenen Rohrwandteilen und zwei diese ebenen Rohrwandteile miteinander verbindenden, ebenfalls einander gegenüberliegenden halbrunden Rohrwandteilen angeordnet ist. Bei dieser Anordnung kann die Faser zwar im Gegensatz zu den Anordnungen nach der GB-A 2 122 767 und der GB-A 2 157 018 ohne jede axiale Zugbelastung von ihrem wellenförmigen Verlauf in einen geradlinigen Verlauf übergehen, solange das oder die Flachrohre noch gerade sind, aber dieser Zustand ist praktisch nur während der Herstellung des Kabels gegeben, denn bereits am Ende des Herstellungsprozesses wird das Kabel auf eine Kabelrolle aufgerollt, und dabei müssen die Flachrohre mit dem Kabel gekrümmt werden können und dürfen daher nicht so hart sein, dass sie bei einer solchen Krümmung brechen würden. Die Flachrohre müssen also aus einem biegsamen Material bestehen, und wenn das der Fall ist, dann werden sie in Krümmungsbereichen des Kabels innerhalb ihres elastischen Deformationsbereiches plattgedrückt, weil Flachrohre ja bekanntlich gegenüber äusseren Pressdrücken wesentlich weniger stabil als zylindrische Rohre sind. Dieses Plattdrücken innerhalb des elastischen Deformationsbereiches verschwindet zwar wieder, sobald das Kabel geradlinig ausgelegt wird, stellt sich andererseits aber an Stellen, wo das Kabel kurvenförmig bzw. gekrümmt verlegt werden muss, wieder ein, und als Folge dieses Plattdrückens werden die innerhalb der Flachrohre wellenförmig verlaufenden Fasern in Krümmungsbereichen des Kabels zwischen den genannten einander gegenüberliegenden ebenen Rohrwandteilen festgehalten bzw. festgepresst, so dass der gerade in Krümmungsbereichen des Kabels erforderliche Längenausgleich zwischen an der Krümmungsinnenseite liegenden Faserabschnitten und an der Krümmungsaussenseite liegenden Faserabschnitten nicht stattfinden kann bzw. gerade in Krümmungsbereichen des Kabels der besagte Übergang des wellenförmigen Faserverlaufes in einen geradlinigen Verlauf erschwert oder sogar verunmöglicht ist und jedenfalls mit beträchtlichen axialen Zugbelastungen der Fasern verbunden ist, die im Falle eines starken Plattdrückens der Flachrohre bzw. einer völligen Festpressung der in diesen wellenförmig verlaufenden Fasern, d. h. also in Bereichen starker Krümmungen des Kabels zum Zerreissen der Fasern führen kann. Weder mit dem Vorschlag nach der oben erwähnten GB-A noch mit dem Vorschlag nach der zuvor erörterten FR-A lässt sich also die Bedingung erfüllen, die optischen Fasern unter allen Umständen vor axialen Zugbelastungen und damit vor der Gefahr eines Zerreissens zu schützen, und das gleiche gilt auch für alle anderen in dieser Hinsicht bekanntgewordenen Vorschläge. So besteht beispielsweise bei dem Vorschlag nach der französischen Patentanmeldung FR-A 2 534 385, für jede einzelne optische Faser einen dieselbe umgebenden im wesentlichen zylindrischen Träger aus einem thermoplastischen Material vorzusehen, der mit einem über ca. 85% seines Durchmessers reichenden und den Träger daher nahezu in zwei Halbzylinder aufteilenden Schlitz zur Aufnahme der Faser und zwei in der Mitte der beiden Halbzylinder angeordneten Armierungsdrähten versehen ist, ebenso wie bei den zuvor erörterten Flachrohren die Gefahr eines Plattdrückens des Trägers bzw. eines Zusammendrückens des Schlitzes und damit eines Festklemmens der Faser in dem Schlitz, dass dann in Krümmungsbereichen des Trägers axiale Zugbelastungen der Faser zur Folge hat, die zum Zerreissen der Faser führen können. Zwar besteht diese Gefahr des Zusammendrückens des Schlitzes bei einem einzelnen solchen Träger nicht, weil die beiden Armierungsdrähte nur Krümmungen des Trägers zulassen, die kein Zusammendrücken des Schlitzes bewirken können, aber ein Kabel mit optischen Fasern umfasst ja in aller Regel nicht nur eine einzige sondern mehrere optische Fasern und müsste dementsprechend auch eine Mehrzahl solcher Träger für die einzelnen Fasern umfassen, und in diesem Fall können innere Pressdrücke im Kabel, die ein solches Zusammendrücken der Schlitze der einzelnen Träger bewirken, besonders in Krümmungsbereichen des Kabels nicht mehr ausgeschlossen werden. Und bei verschiedenen anderen bekanntgewordenen Vorschlägen zur Erfüllung der obengenannten Bedingung wie beispielsweise den Vorschlägen nach der australischen Patentanmeldung AU-A 543574 und der französischen Patentanmeldung FR-A 2 489 002 ist ein schraubenlinienförmiger Verlauf der optischen Fasern in Kabellängsrichtung vorgesehen, bei dem sich die besagte Bedingung aus den oben schon näher erläuterten Gründen ohnehin nicht erfüllen lässt. Zwar ist bei diesen Vorschlägen mit schraubenlinienförmigem Faserverlauf in der Regel mit besonderen Massnahmen für eine Verminderung der Gefahr des Zerreissens der Fasern gesorgt, bei der genannten AU-A beispielsweise durch die Herstellung des Kabels bei einer Temperatur an der oberen Grenze des Betriebstemperaturbereiches und die sich damit bei mittleren Betriebstemperaturen einstellende stärkere Kontraktion des gesamten Kabels als der der Fasern und der daraus bei mittleren und tiefen Betriebstemperaturen resultierenden grösseren Länge der Fasern als der des Kabels und bei der FR-A 2 489 002 beispielsweise durch eine elastische Abstützung der Fasern im Kabel in radialer Hinsicht mittels einer Schaumstoffzwischenlage zwischen Fasern und festen radialen Abstützmitteln, aber diese Massnahmen reichen für einen völligen Ausschluss der Gefahr des Zerreissens der Fasern nicht aus und sind insbesondere auch nicht geeignet, die optischen Fasern entsprechend der besagten Bedingung vor jeder axialen Zugbelastung — also auch vor axialen Zugbelastungen, die noch nicht zum Zerreissen der Fasern führen — zu schützen.

Gesamthaft gesehen ist also zum Stand der Technik bei Kabeln der eingangs genannten Art zu sagen, dass eine vollständige und unter allen Umständen und Umstandskombinationen aufrechterhaltbare Erfüllung der Bedingung, die optischen Fasern vor jeder axialen Zugbelastung und auch vor stärkeren Krümmungen wie der sogenannten Mikrobiegung zu schützen, bei Kabeln der eingangs genannten Art bisher noch nicht erreicht werden konnte.

Der Erfindung lag daher die Aufgabe zugrunde, ein Kabel der eingangs genannten Art sowie ein Verfahren zu dessen Herstellung und eine Einrichtung zur Durchführung dieses Verfahrens zu schaffen, mit denen die vorgenannte Bedingung vollständig und unter allen Umständen erfüllbar ist.

Erfindungsgemäss wird das erreicht mit einem Kabel zur Übertragung von Informationen mit einer Anzahl von optischen Fasern zur Signalübertragung mit Hilfe von im wesentlichen in Faserlängsrichtung geführten elektromagnetischen Strahlungen von Wellenlängen unter 1 mm mit Führungsmitteln zur Führung der Fasern auf innerhalb von mindestens einer zylindermantelförmigen Schale gelegenen Bahnen, die mit Auslenkungen in Umfangsrichtung der zylindermantelförmigen Schale gegenüber jeweils zugeordneten gedachten, innerhalb der zylindermantelförmigen Schale liegenden und zur Zylinderachse derselben im wesentlichen parallelen Mittellinien in Kabellängsrichtung im wesentlichen wellenförmig verlaufen, wobei die Führungsmittel so ausgebildet sind, dass diese die Bahnen in Längsrichtung des Kabels nur in Abständen in azimutaler Richtung festlegen und daher die Bahnen in azimutaler Richtung bis zum Übergang in Gerade im wesentlichen frei beweglich sind.

Hauptvorteil des vorliegenden Kabels gegenüber den bekannten Kabeln der eingangs genannten Art ist zweifellos die vollständige Erfüllung der genannten Bedingung. Ein weiterer, ebenfalls sehr bedeutender Vorteil des vorliegenden Kabels liegt darin, dass der wellenförmige Faserverlauf jedenfalls im Hinblick auf die Fasern nahezu beliebig starke Krümmungen des Kabels gestattet und es u. a. auch ermöglicht, dass die Armierungen von Kabeln mit optischen Fasern, die bisher zur Verhinderung allzu starker Krümmungen des Kabels auf den Kabelquerschnitt verteilt oder ganz nach aussen in die Peripherie des Kabels verlegt worden waren, wieder wie bei anderen Kabeln allgemein üblich ins Zentrum des Kabels bzw. in den Kabelkern zurückverlegt werden können und damit die Biegsamkeit von Kabeln mit optischen Fasern wieder auf die bei den üblichen Kabeln gebräuchlichen Werte zurückgeführt werden kann, was für die Handhabung von Kabeln mit optischen Fasern insbesondere bei der Kabelverlegung von ganz entscheidender Bedeutung ist. Es ist sogar möglich, mit dem vorliegenden Kabel eine wesentlich grössere Biegsamkeit als bei den üblichen Kabeln zu erreichen und das dazu zu benutzen, die vorliegenden Kabel auf Kabelrollen von wesentlich geringerem Durchmesser als dem der üblichen Kabelrollen aufzuwickeln, was die Kabelverlegung im Vergleich zu den üblichen Kabeln sogar noch vereinfachen würde. Ein weiterer sehr wichtiger Vorteil des wellenförmigen Faserverlaufes innerhalb von zylindermantelförmigen Schalen beim vorliegenden Kabel besteht darin, dass die bei der sonst allgein üblichen Verseilung von Kabeln erforderliche Verschiebung der Leiter in Krümmungsbereichen des Kabels von der Krümmungsinnenseite nach der Krümmungsaussenseite beim vorliegenden Kabel wegfällt, was u. a. die vollständige Erfüllung der Bedingung ermöglicht, die optischen Fasern vor jeder axialen Zugbelastung zu schützen. Und schliesslich hat das vorliegende Kabel den weiteren wichtigen Vorteil, dass es aufgrund der schon erwähnten Möglichkeit der Erzielung ausserordentlich hoher Biegsamkeiten nicht nur auf den üblichen Kabelstrecken wie Kabelkanälen verlegt werden kann, wo bekanntlich wesentlich stärkere Krümmungen des Kabels als bei den üblichen Kabelstrecken vorkommen, und das wiederum ermöglicht die künftige Verwendbarkeit des vorliegenden Kabels auch für Telefonanschlüsse in Gebäuden für die in der Planung befindlichen Bildtelefone mit optischen Fasern als Übertragungskanäle.

Bei einer bevorzugten Ausbildungsform des vorliegenden Kabels weisen alle in ein und derselben zylindermantelförmigen Schale gelegenen Bahnen untereinander gleichgrosse maximale Auslenkungen in Umfangsrichtung der zylindermantelförmigen Schale gegenüber den jeweils zugeordneten gedachten Mittellinien auf, und die Schnittpunkte der in dieser zylindermantelförmigen Schale gelegenen Bahnen mit den jeweils zugeordneten gedachten Mittellinien liegen in jeweils für alle Bahnen gleichen Querschnittsebenen der zylindermantelförmigen Schale, und in jeder dieser Querschnittsebenen sind bei allen Bahnen die Bahnneigungen gegenüber der jeweils zugeordneten Mittellinie untereinander nach Betrag und Richtungssinn gleich.

Vorteilhaft können bei dem vorliegenden Kabel die Bahnen in mindestens einer, vorzugsweise in allen zylindermantelförmigen Schalen zur Erzielung einer minimalen, dem Betrag nach über die gesamte Bahnlänge konstant bleibenden Bahnkrümmung von aneinandergereihten, jeweils eine Halbwelle des wellenförmigen und gleichstark gekrümmten kreisbogenförmigen Bahnstückes gebildet sein, wobei der Zentriwinkel der einzelnen, jeweils eine Halbwelle des wellenförmigen Bahn-

verlaufs bildenden kreisbogenförmigen Bahnstük-ke bei einer maximal möglichen Verlängerung der die Enden der Halbwelle verbindenden Mittellinie um p Prozent, vorzugsweise um einen Sicherheitsfaktor von mindestens 1,05, grösser als

$$362,3° \cdot \sqrt[7]{1 - \sqrt{\frac{500 - p}{500 + 5p}}}$$

sein sollte. Der Vorteil eines solchen Bahnverlaufs liegt darin, dass damit eine minimale Krümmung der optischen Fasern erreicht wird. Die Bahnen können dabei zweckmässig seitlich von zu den Führungsmitteln gehörenden, jeweils zwischen benachbarten Bahnen liegenden und somit ebenfalls von aneinandergereihten, jeweils eine Halbwelle bildenden kreisbogenförmigen Stegstücken gebildeten Stegen begrenzt sein (wie sie in den Ansprüchen 6 und 7 definiert sind).

Anstelle einer solchen durchgehenden seitlichen Begrenzung der Bahnen durch Stege kann aber mit Vorteil auch eine nur stückweise oder sogar nur punktweise seitliche Begrenzung der Bahnen durch Stege vorgesehen sein, wobei bei kreisbogenförmigen Bahnstücken eine wenigstens annähernd punktweise seitliche Begrenzung der Bahnen durch Stege an den Wendepunkten der Bahnen am vorteilhaftesten ist, während beispielsweise bei sinusförmigen Bahnen eine stückweise seitliche Begrenzung der Bahnen durch Stege im Bereich von jeder zweiten maximalen Auslenkung der Bahnen am günstigsten ist.

Mit besonderem Vorteil können die Bahnen in mindestens einer zylindermantelförmigen Schale, vorzugsweise in Schalen mit maximal möglichen Verlängerungen der Mittellinien von mehr als 10%, auch sinusförmig verlaufen, wobei das Verhältnis der Amplitude zur Wellenlänge des sinusförmigen Bahnverlaufs bei einer maximal möglichen Verlängerung der Mittellinien um p Prozent, vorzugsweise um einen Sicherheitsfaktor von mindestens 1,1, grösser als

$$0,15 \cdot \frac{100+p}{100} \cdot \sqrt{1 - \frac{3}{2}(\frac{100}{100+p})^2} + \sqrt{1 - \frac{2}{4}(\frac{100}{100+p})^2}$$

sein sollte.

Ein sinusförmiger Bahnverlauf ist bei grösseren maximal möglichen Verlängerungen der Mittellinien, bei denen sich bei einem aus Kreisbogenstücken zusammengesetzten Bahnverlauf in den Wendepunkten eine zu grosse Bahnneigung ergeben würde, von Vorteil und ergibt sich ausserdem auch von selbst bei einer stückweisen seitlichen Begrenzung der Bahnen durch Stege im Bereich von jeder zweiten maximalen Auslenkung der Bahnen. Die Bahnen können bei sinusförmigem Bahnverlauf zweckmässig seitlich von zu den Führungsmitteln gehörenden, jeweils zwischen benachbarten Bahnen liegenden und somit ebenfalls sinusförmigen Stegen begrenzt sein (wie sie in den Ansprüchen 6 und 7 definiert sind). Zu beachten ist bei einer solchen durchgehenden seitlichen Begrenzung der Bahnen durch sinusförmige oder auch aus kreisbogenförmigen Stegstücken zusammengesetzte Stege, dass die Stege sowohl im Hinblick auf die Stegbreite als auch hinsichtlich des für die Stege verwendeten Materials derart bemessen bzw. beschaffen sein sollten, dass die Wellenform der Stege bei Zugbelastungen der Stege in Achsrichtung des Kabels ohne grössere Widerstände in eine im wesentlichen geradlinige Form übergeht und auf jeden Fall keine Vergrösserung der Wellenlänge dieser Wellenform bei gleichbleibender Wellenamplitude infolge solcher Zugbelastungen möglich ist.

Eine besonders vorteilhafte Ausbildung des vorliegenden Kabels ergibt sich, wenn jede zylindermantelförmige Schale an ihrer Innenseite und ihrer Aussenseite durch je ein im wesentlichen zylindrisches Rohr begrenzt ist und im Zwischenraum zwischen der Aussenwand des inneren Rohres und der Innenwand des äusseren Rohres Stege angeordnet sind, die zu den Führungsmitteln gehören und jeweils zwischen benachbarten Bahnen liegen und sich quer zur Kabellängsrichtung im wesentlichen in radialer Richtung der Schale erstrecken und die durch Verbindungen zwischen benachbarten Stegen miteinander verbunden sind. Der Vorteil dieser Ausbildung liegt in erster Linie darin, dass sich zwischen innerem und äusserem Rohr ein zylindermantelförmiger Hohlraum ergibt, der infolge der gegenseitigen Abstützung von innerem und äusserem Rohr über die Stege auch bei inneren Kabelpressungen z. B. an Krümmungsstellen des Kabels erhalten bleibt, so dass die Wellenform der Bahnen innerhalb dieses Hohlraumes ohne jede Behinderung in eine geradlinige oder weniger stark gewellte Form übergehen kann. Zweckmässig kann diese Ausbildung des vorliegenden Kabels derart weitergebildet sein, dass die jeweils zwischen benachbarten Bahnen liegenden Stege ebenfalls wie die Bahnen in Kabellängsrichtung im wesentlichen wellenförmig verlaufen und die Höhe der Stege in den Bereichen maximaler Auslenkung der Bahnen in eine der beiden Umfangsrichtungen in bezug auf die jeweils zugeordnete Mittellinie gleich dem Abstand zwischen der Aussenwand des inneren Rohres und der Innenwand des äusseren Rohres und in allen anderen Bereichen und insbesondere auch in den Bereichen maximaler Auslenkung der Bahnen in die andere der beiden Umfangsrichtungen in bezug auf die zugeordnete Mittellinie geringer als dieser Abstand zwischen innerem und äusserem Rohr ist und die Vebindungen zwischen benachbarten Stegen in den Bereichen mit geringerer Steghöhe als dem Abstand zwischen innerem und äusserem Rohr vorzugsweise von nahe der Aussenwand des inneren Rohres oder nahe der Innenwand des äusseren Rohres angeordneten, jeweils benachbarte Stege sprossenartig miteinander verbindenden Querstäbchen gebildet sind, wobei die Steghöhe in Kabellängsrichtung vorzugsweise im wesentlichen wellenförmig um einen unter dem Abstand zwischen innerem und äusserem Rohr liegenden Mittelwert herum verläuft und sich die Maxima dieses wellenförmigen Steghöhenverlaufes in den Bereichen maximaler Auslenkung der Bahnen in die genannte eine der beiden Umfangsrichtungen und die Minima desselben in den Bereichen maximaler Auslenkung der Bahnen in die genannte andere der beiden Umfangsrichtungen in bezug auf die jeweils zugeordnete Mittellinie befinden. Der Vorteil dieser Weiterbildung liegt darin, dass die die Bahnen durchgehend begrenzenden Stege in den Bereichen mit geringerer Steghöhe als dem Abstand zwischen innerem und äusserem Rohr innerhalb des oben erwähnten zylindermantelförmigen Hohlraumes ohne Behinderung von ihrer Wellenform in eine geradlinige oder weniger stark gewellte Form übergehen können und die zwischen den Stegen liegenden Bahnen somit kräftefrei in die jeweils erforderliche Form gebracht werden können und daher bei einer Änderung der Wellenform der Stege auf die in den Bahnen verlaufenden optischen Fasern keinerlei Kräfte ausgeübt werden, jedoch kommt dieser Vorteil nur bei einer festen mechanischen Kopplung zwischen den Stegbereichen mit gleicher Steghöhe wie dem Abstand zwischen innerem und äusserem Rohr einerseits und innerem sowie äusserem Rohr andererseits voll zur Geltung, weil nur bei einer solchen festen mechanischen Kopplung die zur Veränderung der Wellenform der Stege erforderlichen Kräfte vom Kabel bzw. vom inneren und äusseren Rohr auf die Stege übertragen werden können. Im Unterschied dazu kann die obengenannte besonders vorteilhafte Ausbildung des vorliegenden Kabels aber auch so weitergebildet sein, dass die jeweils zwischen benachbarten Bahnen liegenden Stege ebenso wie die Bahnen in Kabellängsrichtung im wesentlichen wellenförmig verlaufen und die Höhe der Stege über ihre gesamte Länge geringer als der Abstand zwischen der Aussenwand des inneren Rohres und der Innenwand des äusseren Rohres und vorzugsweise wenigstens annähernd konstant ist und die Stege ausser ihrem durch den wellenförmigen Verlauf der Bahnen bedingten wellenförmigen Verlauf mit Auslenkungen in Umfangsrichtung der zylindermantelförmigen Schale zusätzlich noch einen derartigen wellenförmigen Verlauf mit Auslenkungen in radialer Richtung der Schale aufweisen, dass die Stege in den Bereichen maximaler Auslenkung der Bahnen in einer der beiden Umfangsrichtungen in bezug auf die jeweils zugeordnete Mittellinie mit ihrer Innenseite auf der Aussenwand des inneren Rohres und in den Bereichen maximaler Auslenkung der Bahnen in der anderen der beiden Umfangsrichtungen in bezug auf die jeweils zugeordnete Mittellinie mit ihrer Aussenseite auf der Innenwand des äusseren Rohres aufliegen und aufgrund ihrer Eigenelastizität das innere und das äussere Rohr relativ zueinander zentrieren, wobei vorzugsweise Mittel zur Erzielung eines minimalen Reibungskoeffizienten in den Auflagebereichen der Stege auf der Aussenwand des inneren und der Innenwand des äusseren Rohres vorgesehen sind und wobei die Verbindungen zwischen benachbarten Stegen in den Bereichen, in denen die Stege nicht auf dem inneren oder äusseren Rohr aufliegen, vorzugsweise von nahe der Aussenwand des inneren Rohres oder nahe der Innenwand des äusseren Rohres angeordneten, jeweils benachbarte Stege sprossenartig miteinander verbindenden Querstäbchen gebildet sind. In diesem Fall besteht im Prinzip keine bzw. wegen des erwähnten minimalen Reibungskoeffizienten nur eine fast vernachlässigbar geringe mechanische Kopplung an den einzelnen Stegauflagebereichen zwischen den Stegen einerseits und innerem bzw. äusserem Rohr andererseits, so dass sich nur über grössere Längen des Kabels durch Summierung der an den einzelnen Auflagebereichen entstehenden sehr geringen Reibungskräfte eine mechanische Kopplung zwischen den Stegen einerseits und dem Kabel bzw. dem inneren und äusseren Rohr andererseits ergibt, durch die dann z. B. bei einer Krümmung des Kabels an einer bestimmten Stelle die zur Veränderung der Wellenform der Stege erforderlichen Kräfte vom Kabel bzw. vom inneren und äusseren Rohr auf die Stege übertragen werden, und aufgrund dieser fehlenden bzw. sehr geringen mechanischen Kopplung zwischen Stegen und innerem bzw. äusserem Rohr an den einzelnen Auflagebereichen sind die Stege und damit die zwischen denselben liegenden Bahnen vorteilhafterweise im Prinzip innerhalb der vom inneren und äusseren Rohr begrenzten zylindermantelförmigen Schale frei beweglich, aber andererseits ist diese freie Beweglichkeit an Krümmungsstellen des Kabels nur solange gegeben, als die von den Stegen gebildete Feder zwischen innerem und äusserem Rohr nicht vollständig zusammengedrückt und damit die Stege zwischen innerem und äusserem Rohr festgepresst werden, so dass bei der letztgenannten Weiterbildung der obengenannten besonders vorteilhaften Ausbildung des Kabels die Krümmbarkeit des Kabels um einiges geringer als bei der erstgenannten Weiterbildung ist. Eine freie Beweglichkeit der Bahnen innerhalb der zylindermantelförmigen Schale ohne eine solche Gefahr einer Festsetzung der Bahnen bzw. einer Festklemmung der diese begrenzenden Stege an Stellen starker Krümmungen des Kabels schliesslich wird bei einer bevorzugten Weiterbildung der obengenannten besonders vorteilhaften Ausbildung des vorliegenden Kabels dadurch erzielt, dass nur in den Bereichen maximaler Auslenkung der Bahnen in eine der beiden Umfangsrichtungen in bezug auf die zugeordnete Mittellinie jeweils zwischen benachbarten Bahnen Stege vorgesehen sind und die Höhe dieser Stege gleich dem Abstand zwischen der Aussenwand des inneren Rohres und der Innenwand des äusseren Rohres ist und in allen anderen Bereichen und insbesondere auch in den Bereichen maximaler Auslenkung der Bahnen in die andere der beiden Umfangsrichtungen in bezug auf die zugeordnete Mittellinie keine Stege zwischen benachbarten Bahnen vorgesehen sind und die Stege in Umfangsrichtung der zylindermantelförmigen Schale durch feste Brücken zwischen jeweils benachbarten Stegen und in Kabellängsrichtung vorzugsweise durch ein nahe der Innenwand des äusseren Rohres oder nahe der Aussenwand des inneren Rohres angeordnetes, sich in Kabellängsrichtung erstreckendes gummiartiges Band aus einem hochelastischen Material miteinander verbunden sind. Diese bevorzugte Weiterbildung vereinigt die Vorteile der beiden erstgenannten Weiterbildungen, also die mit der ersten Weiterbildung erzielbare Kräftefreiheit im Hinblick auf die Bahnen und die in denselben verlaufenden optischen Fasern und die mit der zweiten Weiterbildung erzielbare freie Beweglichkeit der Bahnen innerhalb der zylindermantelförmigen Schale, in sich, ist jedoch nicht mit den einschränkenden Bedingungen für diese erstgenannten Weiterbildungen wie der Bedingung einer festen mechanischen Kopplung zwischen Stegen und innerem sowie äusserem Rohr bei der ersten Weiterbildung und der Bedingung einer nicht allzu starken Krümmung des Kabels bei der zweiten Weiterbildung verknüpft und ist daher insgesamt als vorteilhafteste Weiterbildung der obengenannten besonders vorteilhaften Ausbildung des vorliegenden Kabels anzusehen.

Die Wellenlänge des wellenförmigen Bahnverlaufs kann bei dem vorliegenden Kabel vorteilhaft im Bereich von 2 bis 20 cm, vorzugsweise von 2 bis 5 cm, liegen.

Mit besonderem Vorteil können ferner bei dem vorliegenden Kabel die Führungsmittel zur Führung der Fasern Röhrchen umfassen, innerhalb derer die Fasern verlaufen, wobei die Röhrchen sich längs der Bahnen erstrecken. Dabei kann zweckmässig innerhalb jedes Röhrchens eine Vielzahl von Fasern verlaufen, da die Röhrchen beim vorliegenden Kabel praktisch keinem eine Pressung der im Röhrchen verlaufenden Fasern gegeneinander und damit eine Mikrobiegung der Fasern bewirkenden äusseren Druck ausgesetzt sind. Der Vorteil solcher Röhrchen liegt darin, dass sie einerseits ebenso wie die eingangs erwähnten bekannten relativ harten Röhrchen jeweils eine grössere Anzahl von optischen Fasern zu führen vermögen, andererseits aber wie gesagt keinem eine Pressung der im Röhrchen verlaufenden Fasern gegeneinander oder gegen die Röhrcheninnenwand bewirkenden äusseren Druck ausgesetzt sind und daher im Gegensatz zu den einen relativ hohen Herstellungsaufwand verursachenden bekannten harten Röhrohen mit einem sehr geringen Herstellungsaufwand aus einem weichen Material hergestellt werden können und wegen dieses weichen Material zudem auch keine besondere Nylon-Gleitschicht an der Röhrcheninnenwand wie die bekannten harten Röhrchen benötigen. Es ist in diesem Zusammenhang noch zu erwähnen, dass die Verwendung solcher Röhrchen insbesondere bei der oben erwähnten bevorzugten Weiterbildung der genannten besonders vorteilhaften Ausbildung des vorliegenden Kabels von grossem Vorteil ist. Natürlich kann übrigens anstatt einer Vielzahl von Fasern in jedem Röhrchen und damit in jeder Bahn auch nur eine einzige Faser verlaufen, aber bei nur einer Faser pro Bahn kann bei dem vorliegenden Kabel zweckmässig auch ganz auf solche Röhrchen verzichtet werden.

Die Erfindung bezieht sich weiter auf ein Verfahren zur Herstellung des vorliegenden Kabels, bei dem die jeweils einer zylindermantelförmigen Schale zugeordneten Fasern und die Führungsmittel zur Führung derselben auf in Kabellängsrichtung im wesentlichen wellenförmig verlaufenden Bahnen in einem der betreffenden zylindermantelförmigen Schale zugeordneten Band zusammengefasst werden, auf dem die Bahnen mit Auslenkungen in Querrichtung des Bandes gegenüber jeweils zugeordneten in Längsrichtung des Bandes verlaufenden Mittellinien in Bandlängsrichtung im wesentlichen wellenförmig verlaufen und bei dem die Führungsmittel so ausgebildet sind, dass diese die Bahnen in Längsrichtung des Kabels nur in Abständen in azimutaler Richtung festlegen und daher die Bahnen in azimutaler Richtung bis zum Übergang in Gerade im wesentlichen frei beweglich sind, und das Band derart um den den Raum innerhalb der betreffenden zylindermantelförmigen Schale ausfüllenden Innenteil des Kabels herumgeschlagen wird, dass die Bandlängsrichtung im wesentlichen mit der Kabellängsrichtung übereinstimmt.

Das Verfahren hat den entscheidenden Vorteil, dass es erstmalig die Möglichkeit eröffnet, in kontinuierlicher Herstellungsweise Kabel mit optischen Fasern herzustellen, bei denen relativ grosse prozentuale Verlängerungen z. B. infolge thermischer Expansion zulässig sind, weil die grosse prozentuale Verlängerbarkeit durch den wellenförmigen Faserverlauf auf dem Band vorgegeben werden kann und das Band dann mit gleicher Geschwindigkeit wie die übrigen Kabelteile in das Kabel eingezogen werden kann.

Bei einer besonders bevorzugten Ausführungsform dieses Verfahrens wird der Innenteil des Kabels vor dem Aufbringen des Bandes mit einem denselben nach aussen begrenzenden inneren Rohr versehen und nach dem Aufbringen des Bandes auf dieses innere Rohr wird ein weiteres, das um das innere Rohr herumgeschlagene Band umschliessendes äusseres Rohr auf den von dem Innenteil des Kabels mit dem inneren Rohr und dem darum herumgeschlagenen Band gebildeten Teil des Kabels aufgebracht, wobei das Aufbringen des inneren und des äusseren Rohres vorzugsweise durch Extrusion und das Herumschlagen des Bandes um das innere Rohr vorzugsweise mittels eines das Band während des Zulaufes zu dem inneren Rohr nach und nach in eine im wesentlichen zylindermantelförmige Gestalt bringenden Einlauftrichters erfolgt. Diese Ausführungsform des Verfahrens zur Herstellung des vorliegenden Kabels hat den Vorteil, dass damit die oben erwähnte besonders vorteilhafte Ausbildung des vorliegenden Kabels im Sinne des Hauptvorteils des Verfahrens in kontinuierlicher Herstellungsweise hergestellt werden kann.

Das Band kann bei dem Verfahren zur Herstellung des vorliegenden Kabels mit besonderem Vorteil aus einem mit Stegen als Führungsmitteln versehenen bandförmigen Organ und einer Vielzahl von ebenfalls als Führungsmittel dienenden Röhrchen, innerhalb derer die Fasern verlaufen, zusammengesetzt werden, wobei die einzelnen Röhrchen hierzu jeweils zwischen benachbarte Stege eingelegt werden. Diese Zusammensetzung des Bandes aus einem mit Stegen versehenen bandförmigen Organ und Röhrchen hat den oben schon in Zusammenhang mit der Verwendung von Röhrchen als Führungsmitteln erwähnten Vorteil, dass innerhalb jedes Röhrchen jeweils eine Vielzahl von Fasern verlaufen kann und damit in einer zylindermantelförmigen Schale ohne Schwierigkeiten eine dreistellige Zahl von Fasern untergebracht werden kann und dies mit einfachen und daher wenig aufwendigen, kontinuierlich ablaufenden Verfahrensschritten erreicht werden kann. Dabei kann zur Herstellung der oben erwähnten ersten oder zweiten Weiterbildung der obengenannten besonders vorteilhaften Ausbildung des vorliegenden Kabels als bandförmiges Organ vorteilhaft ein Organ mit die wellenförmigen Bahnen seitlich begrenzenden, in Bandlängsrichtung ebenfalls wellenförmig verlaufenden, untereinander verbundenen Stegen verwendet werden, wobei die Röhrchen dann wellenförmig in die jeweils zwischen benachbarten Stegen gebildeten Bahnen eingelegt werden. Vorzugsweise wird jedoch zur Herstellung der oben erwähnten bevorzugten Weiterbildung der obengenannten besonders vorteilhaften Ausbildung des vorliegenden Kabels als bandförmiges Organ ein gummiartiges Flachband, das im entspannten Zustand in Abständen von je einer Wellenlänge des wellenförmigen Bahnverlaufs mit sich jeweils über einen Bruchteil der Wellenlänge erstreckenden Stegen besetzt ist, verwendet, wobei dieses Flachband vor dem Einlegen der Röhrchen zwischen die Stege in Bandlängsrichtung im Verhältnis der vorgesehenen Bahnlänge des wellenförmigen Bahnverlaufs zur Kabellänge gedehnt wird und die Röhrchen dann im wesentlichen geradlinig zwischen die Stege eingelegt und vorzugsweise dort festgeklemmt werden und das Flachband danach wieder entspannt wird, so dass die Röhrchen und damit natürlich auch die in denselben verlaufenden Fasern bei der Entspannung des Flachbandes von selbst den vorgesehenen wellenförmigen Bahnverlauf annehmen. Die letztgenannte Verfahrensvariante hat den Vorteil, dass das Einlegen der Röhrchen zwischen die Stege in geradliniger Form natürlich wesentlich einfacher und entsprechend weniger aufwendig als das wellenförmige Einlegen bei der zuvor erwähnten Verfahrensvariante ist. Zur Besetzung des gummiartigen Flachbandes mit sich über einen Bruchteil der Wellenlänge erstreckenden Stegen kann bei der letztgenannten Verfahrensvariante vorteilhaft jeweils eine sich in Bandquerrichtung erstreckende Stegleiste mit im Bereich der mit dem Flachband verbundenen Leistenunterseite angeordneten Brücken zwischen benachbarten Stegen verwendet werden, die derart ausgebildet ist, dass sich beim Zusammenbiegen der Stegleiste in eine im wesentlichen zylindrische Form mit der Leistenunterseite nach aussen ein einem Rohrstück ähnliches Gebilde mit einem dem Querschnitt der betreffenden zylindermantelförmigen Schale annähernd entsprechenden Querschnitt und mit zur Aufnahme der genannten Röhrchen vorgesehenen Längslöchern in der Rohrwand des besagten Rohrstückes von vorzugsweise die Form eines gleichseitigen Dreiecks aufweisendem Lochquerschnitt ergibt, wobei die Stegleisten zum Einlegen der einzelnen Röhrchen zwischen jeweils benachbarte Stege mit der Leistenunterseite nach innen derart aufgebogen werden, dass sich jeweils benachbarte Stege mindestens bis zur Einlegbarkeit der Röhrchen gegeneinander aufspreizen, vorzugsweise durch Führung des Flachbandes mit den darauf angeordneten Stegleisten über eine über die Bandbreite reichende oder mehrere im Bereich der Brücken zwischen den Stegen vorgesehene, in Bandquerrichtung konvex gekrümmte Flächen und/oder Führung der Oberteile der Stege in eine zur Einlegbarkeit der Röhrchen zwischen die Stege genügend gespreizte Lage, und wobei die Röhrchen nach dem Aufbiegen der Stegleisten zwischen die Stege eingelegt werden und die Stegleisten nach dem Aufbiegen und Einlegen der Röhrchen wieder in entgegengesetztem Sinn gebogen werden, vorzugsweise bis die Röhrchen zwischen den Stegen festgeklemmt sind, und wobei das Flachband mit den darauf angeordneten Stegleisten und den zwischen die Stege eingelegten Röhrchen danach entspannt und die Röhrchen und damit die in denselben verlaufenden Fasern dadurch den vorgesehenen wellenförmigen Bahnverlauf annehmen und das von Flachband, Stegleisten und Röhrchen gebildete Band anschliessend mit dem Flachband nach aussen um den Innenteil des Kabels herumgeschlagen wird. Vorteilhaft können die Stegleisten dabei in zu dem besagten Rohrstück zusammengebogener Form durch Extrusion und scheibenweises Abtrennen mit einer der Länge des besagten Rohrstückes entsprechenden Scheibendicke vom Extrusionsprodukt hergestellt und mit dem gummiartigen Flachband vorzugsweise durch Kunststoffschweissen verbunden werden.

Die Erfindung bezieht sich weiter auf eine Einrichtung zur Durchführung des Verfahrens zur Herstellung des vorliegenden Kabels, mit Mitteln zum kontinuierlichen Aufbau des Kabels, die Mittel zur kontinuierlichen Lieferung eines Kabelkerns und Extrusionsmittel zur Bildung von zur Kabelachse im wesentlichen konzentrischen rohrförmigen Ummantelungen des gesamten Kabels und/oder jeweils eines Teiles desselben umfassen, sowie mit Mitteln zur Herstellung von mindestens einem Band mit optischen Fasern und Führungsmitteln zur Führung derselben mit Auslenkungen in Querrichtung des Bandes gegenüber jeweils zugeordneten in Längsrichtung des Bandes verlaufenden Mittellinien auf in Bandlängsrichtung im wesentlichen wellenförmig verlaufenden Bahnen, wobei die Führungsmittel so ausgebildet werden, dass diese die Bahnen in Längsrichtung des Kabels nur in Abständen in azimutaler Richtung festlegen und daher die Bahnen in azimutaler Richtung bis zum Übergang in Gerade im wesentlichen frei beweglich sind, und ferner mit Mitteln zum Herumschlagen des Bandes um einen im Rahmen des kontinuierlichen Aufbaus des Kabels bereits aufgebauten Teil des Kabels in eine diesen bereits aufgebauten Teil des Kabels umgebende zylindermantelförmige Schale mit einer mit der Kabellängsrichtung im wesentlichen übereinstimmenden Bandlängsrichtung.

Vorteilhaft kann die Einrichtung dabei einen ersten Extruder zum Aufbringen eines den Kabelkern ummantelnden inneren Rohres auf den Kabelkern, einen in Bewegungsrichtung des Kabels bei seiner Herstellung nach dem ersten Extruder angeordneten Einlauftrichter, mit dem das Band während seines Zulaufes zu dem herzustellenden Kabel bzw. zu dem von dem ersten Extruder auf den Kabelkern aufgebrachten inneren Rohr nach und nach in eine das innere Rohr umgreifende, im wesentlichen zylindermantelförmige Gestalt gebracht wird, und einen in Bewegungsrichtung des Kabels bei seiner Herstellung nach dem Einlauftrichter angeordneten zweiten Extruder zum Aufbringen eines den Kabelkern und das diesen ummantelnde innere Rohr sowie das um dieses herumgeschlagene Band umschliessenden äusseren Rohres auf das Kabel umfassen. Die Einrichtung hat im Vergleich zu den meisten bekannten Einrichtungen zur Kabelherstellung den Vorteil eines vergleichsweise geringen technischen Aufwandes, weil sie im Gegensatz zu den meisten bekannten Einrichtungen zur Kabelherstellung keine Mittel zur Verseilung des Kabels oder von Teilen desselben enthält und bei den bekannten Einrichtungen zur Kabelherstellung in der Regel ein beträchtlicher und meist sogar der überwiegende Teil des technischen Gesamtaufwandes auf derartige Verseilmittel entfällt.

Die Mittel zur Herstellung des Bandes können bei der Einrichtung zur Durchführung des Verfahrens zur Herstellung des vorliegenden Kabels zweckmässig Mittel zur Herstellung eines mit Stegen als Führungsmitteln versehenen bandförmigen Organs und Mittel zur Lieferung von Röhrchen, innerhalb derer die optischen Fasern verlaufen, sowie Mittel zum Einlegen der Röhrchen jeweils zwischen benachbarte Stege umfassen. Dabei können — insbesondere zur Herstellung der oben erwähnten ersten und zweiten Weiterbildung der obengenannten besonders vorteilhaften Ausbildung des vorliegenden Kabels — die Mittel zur Herstellung eines mit Stegen als Führungsmittel, vorzugsweise eine Prägewalze, zur Einprägung der wellenförmigen Bahnen unter gleichzeitiger Bildung von Stegen jeweils zwischen benachbarten Bahnen in ein den Prägemitteln zugeführtes Rohband aus einem verformbaren Material, vorzugsweise aus der Gruppe der thermoplastischen, elastomeren, vernetzten und unvernetzten sowie filzartigen Materialien, und Mittel, vorzugsweise Extrusionsmittel, zur Lieferung des Rohbandes umfassen, wobei die Mittel zum Einlegen der Röhrchen jeweils zwischen benachbarte Stege dann Mittel zu einem wellenförmigen Einlegen sind, die vorzugsweise Mittel zur Erzeugung einer Relativbewegung in Bandquerrichtung zwischen dem bandförmigen Organ und den in dasselbe einzulegenden Röhrchen beim Einlegen derselben umfassen. Vorzugsweise umfassen jedoch — insbesondere zur Herstellung der oben erwähnten bevorzugten Weiterbildung der obengenannten besonders vorteilhaften Ausbildung des vorliegenden Kabels — die Mittel zur Herstellung eines mit Stegen als Führungsmitteln versehenen bandförmigen Organs Mittel, vorzugsweise Extrusionsmittel, zur Lieferung eines gummiartigen Flachbandes und Mittel zur Lieferung von sich jeweils über einen Bruchteil der Wellenlänge des wellenförmigen Bahnverlaufs erstreckenden Stegleisten mit im Bereich der Leistenunterseite angeordneten Brücken zwischen benachbarten Stegen, vorzugsweise in Form von Extrusionsmitteln zur Extrusion der Stegleisten in zu einem rohrstückartigen Gebilde zusammengebogener Form sowie Abtrennmitteln zum scheibenweisen Abtrennen der Stegleisten vom Extrusionsprodukt, sowie Mittel, vorzugsweise eine Kunststoffschweisseinrichtung, zum Verbinden der Stegleisten mit ihren Leistenunterseiten mit dem Flachband, wobei die Mittel zum Einlegen der Röhrchen jeweils zwischen benachbarte Stege in diesem Fall Mittel zu einem im wesentlichen geradlinigen Einlegen sind und Mittel zum Dehnen des mit den Stegleisten besetzten gummiartigen Flachbandes im Verhältnis der vorgesehenen Bahnlänge des wellenförmigen Bahnverlaufs zur Kabellänge vor dem Einlegen sowie zum Entspannen nach dem Einlegen und ferner Mittel zum Aufbiegen der Stegleisten mit der Leistenunterseite nach innen zur Erzielung eines Aufspreizens von jeweils benachbarten Stegen gegeneinander mindestens bis zur Einlegbarkeit der Röhrchen zwischen dieselben, vorzugsweise in Form einer Laufrolle für das mit den Stegleisten besetzte Flachband mit einer nach aussen gewölbten und zweckmässig zusätzlich quer zur Laufrichtung gewellten Lauffläche mit Wellentälern im Bereich der Stege und Wellenbergen im Bereich der Brücken zwischen den Stegen, umfassen. Die letztgenannte Ausbildungsform der Einrichtung zur Durchführung des Verfahrens zur Herstellung des vorliegenden Kabels hat neben dem schon erwähnten relativ geringen technischen Gesamtaufwand noch den besonderen Vorteil, dass die Bahnlänge des wellenförmigen Bahnverlaufs und damit das Verhältnis derselben zur Kabellänge bzw. die zulässige prozentuale Verlängerbarkeit des Kabels durch blosses Verstellen des Drehzahlverhältnisses von zwei die Dehnung des gummiartigen Flachbandes bewirkenden Transportrollen, über die das Band geführt wird, auf einfache Weise variierbar ist und die Einrichtung damit leicht an die für das herzustellende Kabel hinsichtlich seiner prozentualen Verlängerbarkeit geltenden Bedingungen anpassbar ist.

Anhand der nachstehenden Figuren ist die Erfindung im folgenden an einem Ausführungsbeispiel näher erläutert. Es zeigen

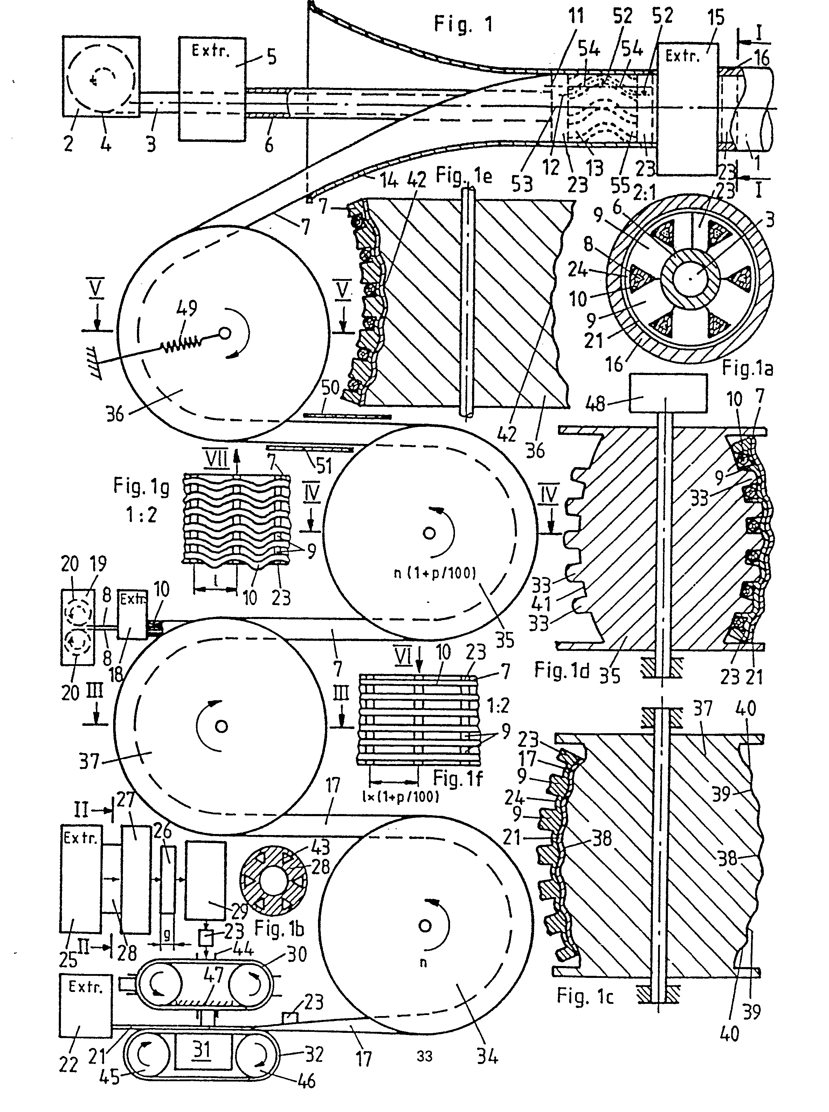

Fig. 1 ein Ausführungsbeispiel einer Einrichtung zur Herstellung eines Kabels nach der Erfindung in schematischer Darstellung

Fig. 1a einen Querschnitt durch das mit der Einrichtung nach Fig. 1 hergestellte Kabel in der Schnittebene I-I in Fig. 1 in vergrössertem Massstab (2:1)

Fig. 1b einen Querschnitt durch ein zur Herstellung von Stegleisten dienendes Extrusionsprodukt in der Schnittebene II-II in Fig. 1

Fig. 1c einen Längsschnitt durch eine zu der Einrichtung in Fig. 1 gehörende Laufrolle für ein mit Stegleisten besetztes Band in der Schnittebene III-III in Fig. 1

Fig. 1d einen Längsschnitt durch eine zu der Einrichtung in Fig. 1 gehörende, eine Dehnung des mit Stegleisten besetzten Bandes bewirkende Umlenkrolle in der Schnittebene IV-IV in Fig. 1

Fig. 1e einen Längsschnitt durch eine zu der Einrichtung in Fig. 1 gehörende Rolle für das mit Stegleisten besetzte und mit Röhrchen für die optischen Fasern versehene Band in der Schnittebene V-V in Fig. 1

Fig. 1f eine Draufsicht auf das mit Stegleisten besetzte und mit Röhrchen für die optischen Fasern versehene Band in der Blickrichtung VI in Fig. 1 in verkleinertem Massstab (1:2)

Fig. 1g eine Draufsicht auf das mit Stegleisten besetzte und mit Röhrchen für die optischen Fasern versehene Band in der Blickrichtung VII in Fig. 1 in verkleinertem Massstab (1:2).

Die in Fig. 1 gezeigte Einrichtung zur Herstellung eines Kabels nach der Erfindung umfasst als Mittel zum kontinuierlichen Aufbau des Kabels 1 Mittel 2 zur kontinuierlichen Lieferung eines Kabelkerns 3, hier in Form der innerhalb des Blockes 2 gestrichelt angedeuteten Kabelkern-Rolle 4, einen ersten Extruder 5 zum Aufbringen eines den Kabelkern 3 ummantelnden inneren Rohres 6 auf den Kabelkern 3, Mittel zur kontinuierlichen Herstellung eines Bandes 7 mit optischen Fasern 8 sowie Stegen 9 und Röhrchen 10 als Führungsmittel zur Führung der optischen Fasern 8 mit Auslenkungen in Querrichtung des Bandes 7 gegenüber jeweils zugeordneten in Längsrichtung des Bandes 7 verlaufenden Mittellinien 11 auf in Bandlängsrichtung im wesentlichen wellenförmig verlaufenden Bahnen 12, Mittel zum Herumschlagen des Bandes 7 um das innere Rohr 6 in eine dieses innere Rohr 6 umgebende zylindermantelförmige Schale 13 in Form eines in Bewegungsrichtung des Kabels 1 bei seiner Herstellung nach dem ersten Extruder 5 angeordneten Einlauftrichters 14, mit dem das Band 7 während seines Zulaufes zu dem herzustellenden Kabel bzw. dem von dem ersten Extruder 5 auf den Kabelkern 3 aufgebrachten inneren Rohr 6 nach und nach in eine das innere Rohr 6 umgreifende, im wesentlichen zylindermantelförmige Gestalt gebracht wird, und einen in Bewegungsrichtung des Kabels bei seiner Herstellung nach dem Einlauftrichter 14 angeordneten zweiten Extruder 15 zum Aufbringen eines den Kabelkern 3 und das diesen ummantelnde innere Rohr 6 sowie das um dieses herumgeschlagene Band 7 umschliessenden äusseren Rohres 16 auf das Kabel 1.

Die Mittel zur kontinuierlichen Herstellung des Bandes 7 umfassen bei der Einrichtung in Fig. 1 Mittel zur kontinuierlichen Herstellung eines mit Stegen 9 als Führungsmitteln versehenen bandförmigen Organs 17 und Extrusionsmittel 18 in Form von sechs einzelnen Extrudern oder einem Mehrfachextruder zur Lieferung der in das bandförmige Organ 17 zwischen die Stege 9 einzulegenden sechs Röhrchen 10 und ferner Mittel 19 zur kontinuierlichen Lieferung der in die Röhrchen 10 einzuziehenden optischen Fasern 8, hier in Form der innerhalb des Blockes 19 gestrichelt angedeuteten Faser-Rollen 20, sowie Mittel zum Einlegen der Röhrchen 10 jeweils zwischen benachbarte Stege 9. Die Mittel zur kontinuierlichen Herstellung des mit Stegen 9 als Führungsmitteln versehenen bandförmigen Organs 17 umfassen dabei Mittel zur Lieferung eines gummiartigen Flachbandes 21, hier in Form eines Extruders 22, und Mittel zur Lieferung von sich jeweils über einen Bruchteil der Wellenlänge l des wellenförmigen Bahnverlaufs erstreckenden Stegleisten 23 mit im Bereich der Leistenunterseite angeordneten Brücken 24 zwischen benachbarten Stegen 9 — hier in Form von einem Extruder 25 zur Extrusion der Stegleisten in zu einem rohrstückartigen Gebilde 26 zusammengebogener Form sowie Abtrennmitteln 27 zum scheibenweisen Abtrennen der Stegleisten von dem in Fig. 1b im Querschnitt dargestellten Extrusionsprodukt 28 des Extruders 25 sowie weiteren Mitteln 29 zum Aufschneiden des rohrstückartigen Gebildes 26 an den aus der Fig. 1a entnehmbaren Stellen in der Mitte zwischen einem der Stege sowie an den Spitzen der dreieckigen Ausnehmungen in der Rohrwand des rohrstückartigen Gebildes 26 und zum Geraderichten der Stegleisten 23 nach diesem Aufschneiden sowie zur Übergabe der Stegleisten 23 an ein die Stegleisten 23 zu dem gummiartigen Flachband 21 beförderndern und jeweils mit der Leistenunterseite auf dieses aufsetzenden und über eine Schweissstrecke mit diesem vorwärtsbewegenden und dabei auf dieses aufdrückenden Förderband 30 — und ausserdem Mittel zum Verbinden der Stegleisten 23 mit ihren Leistenunterseiten mit dem gummiartigen Flachband 21, hier in Form einer Kunststoffschweisseinrichtung 31 zum Hochfrequenzschweissen der Leistenunterseiten der Stegleisten 23 auf das Flachband 21 während der Beförderung des Flachbandes 21 mit Hilfe des Förderbandes 32 über die Schweisseinrichtung 31 hinweg, und die Mittel zum Einlegen der Röhrchen 10 jeweils zwischen benachbarte Stege 9 sind bei der Einrichtung in Fig. 1 Mittel zu einem im wesentlichen geradlinigen Einlegen der Röhrchen und umfassen Mittel zum Dehnen des mit den Stegleisten 23 besetzten gummiartigen Flachbandes um p Prozent im Verhältnis $(1+p/100):1$ der vorgesehenen Bahnlänge des wellenförmigen Bahnverlaufs zur Kabellänge vor dem Einlegen sowie zum Entspannen nach dem Einlegen der Röhrchen — hier in Form der beiden mit verschiedenen Drehzahlen n und $n(1+p/100)$ umlaufenden und daher eine Dehnung des Flachbandes 21 um p Prozent im Bereich zwischen erster und zweiter Transportrolle bewirkenden, mit Fingern 33 (siehe Fig. 1d) zum Erfassen der Stege 9 und damit zur schlupflosen Förderung des mit den Stegen 9 bzw. den Stegleisten 23 besetzten gummiartigen Flachbandes 21 versehenen Transportrollen 34 und 35 sowie der federnd aufgehängten und daher die Spannung des von den Transportrollen 34 und 35 gedehnten Flachbandes 21 auf einen der Federkraft der federnden Aufhängung entsprechenden geringen Wert herabsetzenden und somit das Flachband 21 im wesentlichen entspannenden Umlenkrolle 36 — und ausserdem Mittel zum Aufbiegen der Stegleisten 23 mit der Leistenunterseite nach innen zur Erzielung eines Aufspreizens von jeweils benachbarten Stegen 9 gegeneinander mindestens bis zur Einlegbarkeit der Röhrchen 10 zwischen dieselben, hier in Form einer im Bereich zwischen den beiden Transportrollen 34 und 35 angeordneten, im Längsschnitt in Fig. 1c gezeigten Laufrolle 37 für das mit Stegleisten 23 besetzte Flachband 21 mit einer nach aussen gewölbten und zusätzlich quer zur Laufrichtung gewellten Laufffläche 38 mit Wellentälern 39 im Bereich der Stege 9 und Wellenbergen 40 im Bereich der Brücken 24 zwischen den Stegen 9, und schliesslich Mittel, um die Stegleisten 23 nach dem Aufbiegen und Einlegen der Röhrchen 10 und vor dem Entspannen des Flachbandes 21 wieder in entgegengesetztem Sinn zu biegen, bis die Röhrchen 10 zwischen den Stegen 9 festgeklemmt sind, und um diese Biegung der Stegleisten 23 in entgegengesetztem Sinn und damit die Klemmung der Röhrchen 10 zwischen den Stegen 9 bis zum Zulauf des Bandes 7 zu dem herzustellenden Kabel 1 und anschliessend auch innerhalb des Kabels 1 aufrechtzuerhalten, hier in Form der im Schnitt in Fig. 1d ersichtlichen Wölbung der Laufffläche 41 der Transportrolle 35 nach aussen zur Erzielung der Biegung der Stegleisten 23 vor dem Entspannen des Flachbandes 21 in dem besagten entgegengesetzten Sinn sowie in Form der im Schnitt in Fig. 1e ersichtlichen Wölbung der Laufffläche 42 der Umlenkrolle 36 nach innen zur Aufrechterhaltung der Biegung der Stegleisten 23 nach dem Entspannen des Flachbandes 21 in dem besagten entgegengesetzten Sinn sowie schliesslich in Form der diese Biegung der Stegleisten 23 in dem besagten entgegengesetzten Sinn ebenfalls aufrechterhaltenden und mit dem allmählichen Herumschlagen des Bandes 7 um das innere Rohr 6 noch weiter verstärkenden Wölbung der die Laufffläche für das Band 7 bei seinem Zulauf zu dem herzustellenden Kabel 1 bildenden Innenwand des Einlauftrichters 14 nach innen und in Form der diese verstärkte Biegung der Stegleisten 23 in dem besagten entgegengesetzten Sinn letztlich fixierenden Wölbung der Innenwand des äusseren Rohres 16 nach innen.

Das Verfahren zur Herstellung des in Fig. 1 dargestellten Kabels 1 mittels der in Fig. 1 gezeigten Einrichtung ist ein kontinuierliches Verfahren, das folgendermassen abläuft: Der Extruder 22 liefert etwa mit der Herstellungsgeschwindigkeit des Kabels 1 bzw. mit einer der Länge des pro Zeiteinheit hergestellten Kabels 1 etwa entsprechenden Länge pro Zeiteinheit ein gummiartiges Flachband 21 mit einer dem πfachen des Innendurchmessers des äusseren Rohres 16 des Kabels 1 etwa entsprechenden Breite und einer relativ geringen Dicke in der Grössenordnung von beispielsweise etwa 0,5 bis 2 mm. Gleichzeitig liefert der Extruder 25 das in Fig. 1b im Querschnitt dargestellte Extrusionsprodukt 28, aus dem die Stegleisten 23 hergestellt werden und das einen dem Durchmesser des inneren Rohres 6 des Kabels 1 entsprechenden Innendurchmesser und einen dem Innendurchmesser des äusseren Rohres 16 abzüglich der doppelten Dicke des Flachbandes 21 entsprechenden Aussendurchmesser sowie sechs etwa den Querschnitt eines gleichseitigen Dreiecks aufweisende Ausnehmungen 43 aufweist, und zwar mit einer mittleren Geschwindigkeit, die etwa im Verhältnis der Breite g der Stegleisten 23 zu Wellenlänge l des wellenförmigen Bahnverlaufes der Bahnen 12 geringer als die Herstellungsgeschwindigkeit des Kabels 1 ist. Von dem vom Extruder 25 gelieferten Extrusionsprodukt 28 werden mit den Abtrennmitteln 27 Scheiben mit einer der Breite g der Stegleisten 23 entsprechenden Dicke abgetrennt, von denen jede eine zu einem rohrstückartigen Gebilde 26 mit dem in Fig. 1b dargestellten Querschnitt zusammengebogene Stegleiste bildet, und diese Scheiben bzw. rohrstückartige Gebilde 26 werden dann an die Mittel 29 weitergegeben, wo sie an den aus der Fig. 1a entnehmbaren Stellen in der Mitte zwischen einem der Stege sowie an den Spitzen der dreieckigen Ausnehmungen 43 in der Rohrwand des rohrstückartigen Gebildes 26 aufgeschnitten und anschliessend zu Stegleisten 23 geradegerichtet werden und die so gebildeten Stegleisten 23 dann an das Förderband 30 weitergegeben werden. Prinzipiell könnte auf dieses Aufschneiden auch verzichtet werden, wenn das Extrusionsprodukt 28 bereits vom Extruder 25 in «aufgeschnittener» Form extrudiert wird, aber in diesem Fall müsste durch besondere Massnahmen wie beispielsweise ein Einfassen des Extrusionsproduktes 28 und des abzutrennenden rohrstückartigen Gebildes 26 beiderseits der Trennstelle von aussen und von innen her durch je ein Aussenrohr und ein Innenrohr beiderseits der Trennstelle sowie ein praktisch druckloses Abtrennen beispielsweise mit einem in sich geschlossenen und mit hoher Geschwindigkeit umlaufenden Schneiddraht dafür gesorgt werden, dass sich trotz der Extrusion des Extrusionsproduktes 28 in bereits «aufgeschnittener» Form glatte Trennflächen an den abgetrennten rohrstückartigen Gebilden 26 ergeben. In diesem Fall würden dann die Mittel 29 nicht mehr zum Aufschneiden sondern nur noch zum Geraderichten und zur Weitergabe der so gebildeten Stegleisten 23 an das Förderband auch noch möglich, die Stegleisten 23 unmittelbar in einer «aufgeschnittenen und geradegerichteten» Form mit dem Extruder 25 zu extrudieren und dann mit den Abtrennmitteln 27 vom Extrusionsprodukt 28 jeweils eine Stegleiste 23 mit der Stegleistenbreite g abzutrennen und an die Mittel 29 weiterzugeben, die in diesem Fall dann nur noch zur Weitergabe der Stegleisten 23 an das Förderband 30 dienen würden, aber gegenüber einer solchen Extrusion der Stegleisten 23 in einer «aufgeschnittenen und geradegerichteten» Form hat die Extrusion der Stegleisten in zu einem rohrstückartigen Gebilde 26 zusammengebogener Form den Vorteil, dass die Stegleisten in der Form extrudiert werden, die sie nach der Herstellung des Kabels 1 innerhalb desselben einnehmen, so dass die Stegleisten 23 im fertigen Kabel 1 keinen inneren Gefügespannungen ausgesetzt sind. Bei jeder der drei zuvor erwähnten Möglichkeiten, also sowohl bei der Extrusion in «aufgeschnittener» Form und bei der Extrusion in «aufgeschnittener und geradegerichteter» Form, geben die Mittel 29 die einzelnen Stegleisten 23 in einer derartigen Lage an das Förderband 30 weiter, dass die auf der Seite der Brücken 24 zwischen den Stegen 9 liegende Leistenunterseite der Stegleiste 23 von dem Förderband 30 abgewandt ist und die Stege 9 einer von den Mitteln 29 an das Förderband 30 weitergegebenen Stegleiste 23 also mit ihren Oberseiten auf das Förderband 30 zu liegen kommen. Das Förderband 30 ist im Abstand von je einer Wellenlänge I des wellenförmigen Bahnverlaufs der Bahnen 12 mit in Fig. 1 nur schematisch angedeuteten Greifvorrichtungen 44 versehen, die die von den Mitteln 29 im Moment des Vorbeilaufens einer solchen Greifvorrichtung 44 an den zu den Mitteln 29 gehörenden Weitergabemitteln an das Förderband 30 weitergegebene Stegleiste 23 bzw. deren Stege 9 an der Stegoberseite erfassen, so dass die Stegleiste 23 dann mit dem Förderband 30 mitgeführt wird. Das Förderband 30 bewegt sich mit der gleichen Geschwindigkeit, mit der der Extruder 22 das Flachband 21 liefert, also etwa mit der Herstellungsgeschwindigkeit des Kabels 1, und befördert die von den Mitteln 29 übernommenen Stegleisten 23 zu dem Flachband 21 und setzt sie im Abstand der Greifvorrichtungen 44 und damit also im Abstand von einer Wellenlänge I des wellenförmigen Bahnverlaufs der Bahnen 12 mit ihrer Leistenunterseite auf das Flachband 21 auf und fördert sie dann noch mit Laufgeschwindigkeit des Flachbandes 21 weiter, bis sie zusammen mit der Stelle des Flachbandes 21, auf die sie jeweils aufgesetzt worden sind, die Kunststoffschweisseinrichtung 31 passiert haben, woraufhin dann die Greifvorrichtungen 44 die Stegleisten 23 jeweils loslassen, so dass sich die Stegleisten 23 mit dem Flachband 21 weiterbewegen können und die nunmehr leeren Greifvorrichtungen 44 mit dem Förderband 30 wieder zu den Mitteln 29 zur Übernahme von jeweils einer neuen Stegleiste 23 befördert werden können. Die Kunststoffschweisseinrichtung 31 schweisst die Stegleisten 23 mit ihrer Leistenunterseite an die Stellen des Flachbandes 21, auf die sie von dem Förderband 30 jeweils aufgesetzt worden sind, mittels Hochfrequenzschweissung an, während das sich kontinuierlich bewegende Flachband 21 mit den aufgesetzten Stegleisten 23 die Kunststoffschweisseinrichtung 31 passiert.

Während dieser Passage, während der das Anschweissen erfolgt, werden die Stegleisten 23, wie schon erwähnt, noch von dem Förderband 30 weiterbefördert, und das Flachband 21 wird mit der gleichen Geschwindigkeit von dem Förderband 32 befördert. Das Förderband 32 ist in Anpassung an die z. B. aus den Fig. 1c, 1d und 1e ersichtliche gewellte Leistenunterseite der Stegleisten 23, die sich aufgrund der Extrusion der Stegleisten in zu dem besagten rohrstückartigen Gebilde 26 zusammengebogener Form ergibt, quer zu seiner Laufrichtung gewellt, so dass die Leistenunterseite der Stegleisten 23 zusammen mit dem darunterliegenden Flachband 21 genau in das gewellte Förderband 32 passen und dementsprechend die Leistenunterseite der Stegleisten 23 während des Anschweissens an das Flachband 21 mit ihrer gesamten Fläche auf das Flachband 21 gedrückt werden und dadurch eine feste und haltbare Schweissverbindung zwischen Stegleisten 23 und Flachband 21 erzielt werden kann. Zusätzlich hat das gewellte Förderband 32 noch den Vorteil, dass die Stegleisten 23 beim Aufsetzen auf das Flachband 21 und das darunterliegende gewellte Förderband 32 noch relativ zu dem Flachband 21 in Richtung quer zur Laufrichtung des Förderbandes 30 justiert werden, wozu die Greifvorrichtungen 44 auf dem Förderband 30 querverschiebbar angeordnet sein können. Das Förderband 32 kann dabei entweder nur auf seiner dem Flachband 21 zugewandten Aussenseite oder aber durchgehend, also auf seiner Aussen- und seiner Innenseite, gewellt sein, wobei im ersteren Fall die Laufflächen der beiden Förderräder 45 und 46 des Förderbandes 32 und die Laufläche für das Förderband 32 auf der dem Flachband 21 zugewandten Oberseite der Schweisseinrichtung 31 glatt und im letzteren Fall entsprechend der Welligkeit der Innenseite des Förderbandes 32 gewellt sind. Damit das das Flachband 21 beim Anschweissen der Stegleisten 23 von unten her auf die Leistenunterseite der Stegleisten 23 drückende Förderband 32 und das Flachband 21 bei dem Schweissvorgang nicht zusammenkleben oder in irgendeiner anderen Weise aneinander hängenbleiben können, besteht das Förderband 32 aus einem Material, das sich beim Hochfrequenzschweissen nicht erhitzt und besonders gegenüber dem Material des Flachbandes 21 keine adhäsiven Eigenschaften besitzt. Von oben her werden die Stegleisten 23 bzw. deren Leistenunterseiten durch das auf die Oberseiten der Stege 9 drückende Förderband 30 bzw. durch das das Förderband 30 im Schweissbereich abstützende Stützorgan 47, das entweder wie in Fig. 1 gezeigt starr oder aber mit einem auf das Förderband 30 gerichteten Federdruck federnd angeordnet sein kann, fest auf das Flachband 21 aufgedrückt, wodurch beim Anschweissen der Stegleisten 23 an das Flachband 21 die oben schon erwähnte feste und haltbare Schweissverbindung zwischen den Leistenunterseiten der Stegleisten 23 und dem Flachband 21 erzielt wird. Wegen des Druckes des Förderbandes 30 auf die Oberseiten der Stege 9 empfiehlt es sich, auch für das Förderband 30 ein Material zu verwenden, das sich beim Hochfrequenzschweissen nicht erhitzt und gegenüber dem Material der Stegleisten 23 keine adhäsiven Eigenschaften besitzt, so dass auch die Oberseiten der Stege 9 der Stegleisten 23 beim Schweissvorgang nicht mit dem Förderband 30 zusammenkleben oder irgendwie anders an demselben hängenbleiben können. Das durch das Anschweissen der Stegleisten 23 mit ihrer Leistenunterseite an das Flachband 21 entstandene, mit Stegen 9 versehene bandförmige Organ 17 wird dann der Transportrolle 34 zugeleitet und so über dieselbe geführt, dass sich das Flachband 21 wie z. B. in Fig. 1d ersichtlich aussen befindet. Die Transportrolle 34 ist im vorliegenden Fall gleich ausgebildet wie die in Fig. 1d im Längsschnitt gezeigte Transportrolle 35, so dass ein Schnitt durch die Transportrolle 34 in einer Schnittebene entsprechend der Schnittebene IV-IV des in Fig. 1d

gezeigten Längsschnittes der Transportrolle 35 abgesehen davon, dass das bandförmige Organ 17 beim Passieren der Transportrolle 34 noch nicht mit Röhrchen 10 zwischen den Stegen versehen ist, genauso aussieht wie der in Fig. 1d gezeigte Längsschnitt durch die Transportrolle 35. Die Transportrolle 34 dient im Prinzip dazu, die zwischen den Transportrollen 34 und 35 erfolgende Dehnung des bandförmigen Organs 17 bzw. die sich aus dieser elastischen Dehnung ergebende Längsspannung innerhalb des gummiartigen Flachbandes 21 von dem Schweissbereich und auch von dem Extruder 22 fernzuhalten, damit das Anschweissen der Stegleisten 23 mit ihrer Leistenunterseite an das Flachband 21 praktisch ohne Längszug auf das Flachband 21 erfolgen kann und damit die Gefahr eines Zerreissens des beim Schweissen erhitzten und somit erweichten Flachbandes 21 ausgeschlossen wird und um ferner auch einen grösseren Längszug auf das den Extruder 22 verlassende, an dieser Stelle noch warme und dementsprechend auch noch weiche Flachband 21 zu verhindern und damit die Gefahr eines Abreissens des Flachbandes 21 am Ausgang des Extruders 22 auszuschliessen. Die Transportrolle 34 dreht sich demgemäss mit einer Drehzahl n, die so gross ist, dass das über die Transportrolle 34 laufende bandförmige Organ 17 die gleiche Geschwindigkeit wie das Flachband 21 im Schweissbereich und somit die gleiche Geschwindigkeit wie die beiden Förderbänder 30 und 32 hat, deren Laufgeschwindigkeit der Herstellungsgeschwindigkeit des Flachbandes 21 durch den Extruder 22 entspricht. Damit sich kein Schlupf des über die Transportrolle 34 laufenden bandförmigen Organs 17 gegenüber der Transportrolle 34 in Richtung auf den Bereich zwischen den beiden Transportrollen 34 und 35 ergeben kann (der sich ohne besondere Massnahmen infolge der Dehnung des bandförmigen Organs in diesem Bereich und der daraus resultierenden grösseren Längsspannung des bandförmigen Organs 17 in diesem Bereich im Vergleich zu der praktisch vernachlässigbaren Längsspannung des bandförmigen Organs 17 vor Erreichen der Transportrolle 34 ergeben würde), ist die Transportrolle 34 ebenso wie die gleich ausgebildete Transportrolle 35 mit Fingern 33 versehen, die sich vor die Stege 9 des über die Transportrolle 34 laufenden, mit diesen Stegen versehenen bandförmigen Organs 17 legen und so ein Wegrutschen des bandförmigen Organs 17 bzw. einen Schlupf desselben gegenüber der Transportrolle 34 verhindern.

Die Finger der Transportrolle 34 bremsen also sozusagen das bandförmige Organ 17, so dass es nicht mit Schlupf schneller laufen kann als die Transportrolle 34, und dementsprechend braucht also für die Transportrolle 34 kein Antrieb sondern nur eine steuerbare Bremse vorgesehen zu werden, die zweckmässig von einer als Generator geschalteten elektrischen Maschine gebildet wird, deren Bremsleistung über einen geschlossenen Regelkreis mit der auf einen sehr geringen Sollwert einzuregelnden Längsspannung des bandförmigen Organs 17 vor Erreichen der Transportrolle 34 als Regelkriterium geregelt wird, womit sich selbsttätig eine der Geschwindigkeit des Flachbandes 21 im Schweissbereich bzw. der Laufgeschwindigkeit der beiden Förderbänder 30 und 32 bzw. der Herstellungsgeschwindigkeit des Flachbandes 21 durch den Extruder 22 entsprechende Geschwindigkeit des über die Transportrolle 34 laufenden bandförmigen Organs 17 ergibt. Mit dem Verlassen der Transportrolle 34 tritt das bandförmige Organ 17 in den zwischen den Transportrollen 34 und 35 liegenden Dehnungsbereich ein, wo das bandförmige Organ 17 bzw. genauer das gummiartige Flachband 21 aufgrund der höheren Umlaufgeschwindigkeit bzw. der höheren Drehzahl $n(1+p/100)$ der Transportrolle 35 gegenüber der Drehzahl n der Transportrolle 34 um p Prozent auf das $(1+p/100)$fache seiner ursprünglichen Länge gedehnt wird, und mit dieser Erhöhung der Länge des gummiartigen Flachbandes 21 bzw. des bandförmigen Organs 17 um p Prozent auf das $(1+p/100)$fache seiner ursprünglichen Länge beim Eintritt in den besagten Dehnungsbereich steigt auch die Geschwindigkeit des bandförmigen Organs 17 sprunghaft um p Prozent auf das $(1+p/100)$fache seiner Geschwindigkeit vor Erreichen der Transportrolle 34 und damit also etwa auf das $(1+p/100)$fache der Herstellungsgeschwindigkeit des Kabels 1 an. Mit dieser erhöhten Geschwindigkeit passiert das bandförmige Organ 17 die in Fig. 1c im Längsschnitt in der Schnittebene III-III gezeigte Laufrolle 37, wo das bandförmige Organ 17 infolge der nach aussen gewölbten Lauffläche 38 mit seiner Bandoberseite nach aussen gewölbt wird und dadurch die mit dem bandförmigen Organ 17 verbundenen Stegleisten 23 mit ihrer Leistenunterseite nach innen aufgebogen werden und sich demzufolge die jeweils benachbarten Stege 9 auf diesen Stegleisten 23 gegeneinander wie in Fig. 1c ersichtlich soweit aufspreizen, dass zwischen die jeweils benachbarten Stege 9 die Röhrchen 10, innerhalb derer die optischen Fasern 8 verlaufen, unbehindert eingelegt werden können. Um dieses unbehinderte Einlegen der Röhrchen 10 zwischen jeweils benachbarte Stege 9 zu gewährleisten, ist der Durchmesser der Röhrchen 10 zweckmässig derart bemessen, dass die zwischen die benachbarten und gegeneinander aufgespreizten Stege 9 eingelegten Röhrchen 10 nach dem Einlegen gerade die beiden einander gegenüberliegenden seitlichen Wände der jeweils benachbarten Stege 9 und die konvex aufgewölbten Brücken 24 zwischen den jeweils benachbarten Stegen 9 berühren. Im Hinblick darauf, dass sich die zwischen jeweils benachbarten Stegen 9 befindlichen Öffnungen, in die die Röhrchen 10 einzulegen sind, beim Einlegen der Röhrchen 10 zur Vermeidung einer Behinderung beim Einlegen genau unterhalb der Röhrchen 10 befinden müssen bzw. nicht gegenüber den Röhrchen 10 seitenversetzt sein dürfen, ist das unbehinderte Einlegen der Röhrchen 10 zwischen die jeweils benachbarten Stege 9 dadurch gewährleistet, dass einerseits die Stegleisten 23 aufgrund ihrer oben beschriebenen Herstellungsweise an ihrer Leistenunterseite gewellt sind und damit auch das bandförmige Organ 17 in den Bereichen der aufgesetzten Stegleisten 23 an seiner Unterseite wie in Fig. 1c ersichtlich gewellt ist und andererseits die Lauffläche 38 der Laufrolle 37 quer zur Laufrichtung mit Wellentälern 39 im Bereich der Stege 9 und Wellenbergen 40 im Bereich der Brücken 24 zwischen den Stegen 9 gewellt ist und durch diese genau zusammenpassenden Welligkeiten der Unterseite des bandförmigen Organs 17 in den Bereichen der aufgesetzten Stegleisten 23 einerseits und der Lauffläche 38 der Laufrolle 37 andererseits sowie die sich in dem besagten Dehnungsbereich in dem bandförmigen Organ 17 bzw. genauer in dem Flachband 21 ergebende, das bandförmige Organ 17 auf die Lauffläche 38 der Laufrolle 37 aufdrückende und damit gewellte Unterseite des bandförmigen Organs 17 in den Bereichen der aufgesetzten Stegleisten 23 fest in die Wellentäler 39 der entsprechend gewellten Lauffläche 38 der Laufrolle 37 hineindrückende Längsspannung eine Seitenversetzung der obengenannten Öffnungen zwischen jeweils benachbarten Stegen 9 gegenüber den in diese Öffnungen einzulegenden Röhrchen 10 ausgeschlossen ist. Ausserdem resultiert aus der in den Fig. 1c und 1a ersichtlichen Zuspitzung der Stege 9 an ihrer Oberseite eine zusätzliche Sicherheit hinsichtlich der Gewährleistbarkeit eines unbehinderten Einlegens der Röhrchen 10 zwischen die jeweils benachbarten Stege 9 erfolgt oder ist genauer gesagt gerade beendet, wenn das nunmehr mit Röhrchen 10 versehene und damit das Band 7 bildende bandförmige Organ 17 die Laufrolle 37 tangential verlässt. Das hat den Vorteil, dass die Röhrchen 10 bis zu dem zwischen der Laufrolle 37 und der Transportrolle 35 liegenden Bereich, in dem sie dann aus im folgenden noch näher erläuterten Gründen zwischen den Stegen 9 festgeklemmt werden, nicht gekrümmt werden, was im Hinblick auf eine exakte Bemessung der prozentualen Verlängerbarkeit des Kabels 1 relativ zu den optischen Fasern 8 um p Prozent und besonders auch im Hinblick darauf, die optischen Fasern 8 schon bei der Herstellung des Kabels vor axialen Zugbelastungen zu schützen, von wesentlicher Bedeutung ist. Die zwischen die jeweils benachbarten Stege 9 einzulegenden Röhrchen 10 werden von dem Extruder 18 um die in diese Röhrchen 10 einlaufenden optischen Fasern 8 herum extrudiert, und zwar mit einer Extrusionsgeschwindigkeit, die der erhöhten Geschwindigkeit des bandförmigen Organs 17 bzw. des Bandes 7 in dem besagten Dehnungsbereich vom etwa (1+p/100)fachen des Herstellungsgeschwindigkeit des Kabels 1 entspricht. Die in diese Röhrchen 10 bzw. in entsprechende Öffnungen im Extruder 18 mit der gleichen erhöhten Geschwindigkeit einlaufenden optischen Fasern 8 werden von den Mitteln 19 zur kontinuierlichen Lieferung der Fasern 8, hier in Form der innerhalb des Blockes 19 gestrichelt angedeuteten Faser-Rollen 20, geliefert, und zwar praktisch ohne auf die Fasern 8 wirkende axiale Zugbelastungen, wozu im vorliegenden Fall die Faser-Rollen 20 angetrieben werden und dieser Antrieb mit der auf die einzelnen Fasern 8 wirkenden, auf einen sehr geringen Sollwert einzuregelnden Zugspannung als Regelkriterium geregelt wird.

Mit dieser Regelung ergibt sich selbsttätig eine etwa der (1+p/100)fachen Herstellungsgeschwindigkeit des Kabels 1 entsprechende Lieferungsgeschwindigkeit der Fasern 8 durch die Mittel 19. Die Mittel 19 können natürlich im Prinzip auch Mittel zur Produktion der optischen Fasern 8 mit der genannten Lieferungsgeschwindigkeit sein, jedoch handelt es sich hierbei jedenfalls derzeit nur um eine rein theoretische Möglichkeit, weil die optischen Fasern bislang nach der Herstellung noch einer Güteprüfung unterzogen und ungeeignete Fasern aussortiert werden müssen, so dass diese Möglichkeit höchstens bei eine Güteprüfung überflüssig machenden Verbesserungen der Produktionsmethoden realisierbar wäre und es sich daher grundsätzlich empfiehlt, die Mittel 19 als Speichermittel auszubilden, z. B. in Form der gestrichelt angedeuteten Faser-Rollen 20 als Rollenspeicher oder auch in Form von den bekannten Drahtwickeln entsprechenden stehenden Faser-Wickeln, von denen die Fasern praktisch zugspannungslos abgezogen werden können und bei denen daher kein Antrieb und auch keine zugehörige Regelungseinrichtung erforderlich ist, bei denen sich andererseits aber häufig nicht erwünschte Torsion der Fasern um je 360° auf eine der mittleren Länge einer Wickelschleife eines solchen Wickels entsprechende Faserlänge ergibt. Im Zusammenhang mit der Darstellung der Laufrolle 37 in Fig. 1 wäre schliesslich noch darauf hinzuweisen, dass der Rollendurchmesser der Laufrolle 37 zur Vermeidung von nicht mehr vernachlässigbaren Unterschieden in der Laufgeschwindigkeit des wegen der nach aussen gewölbten Lauffläche 38 einen etwas grösseren Durchmesser aufweisenden mittleren Teiles der Lauffläche 38 gegenüber der etwas geringeren Laufgeschwindigkeit der einen etwas geringeren Durchmesser aufweisenden äusseren Teile der Lauffläche 38 wesentlich grösser als diese Durchmesserdifferenz sein muss und zweckmässig mindestens das 100fache, vorzugsweise das 250- bis 1000fache, dieser Durchmesserdifferenz betragen sollte und dass dementsprechend der Rollendurchmesser der Laufrolle 37 bei einer ungefähr massstabsgerechten Darstellung mindestens das 5fache, vorzugsweise das 10- bis 50fache der Rollenbreite betragen müsste und somit der Rollendurchmesser der Laufrolle 37 in Fig. 1 gegenüber den übrigen dargestellten Abmassen, insbesondere der Rollenbreite und den dargestellten Abmassen des bandförmigen Organs 17 bzw. des Bandes 7, in stark verkleinertem Massstab dargestellt ist. Das Gleiche gilt aus den gleichen Gründen auch für die beiden Transportrollen 34 und 35 sowie für die Umlenkrolle 36. Ausserdem sollten auch die Strecken, über die sich das bandförmige Organ 17 bzw. das Band 7 zwischen Schweissstation 31 und Rolle 34 sowie zwischen den Rollen 34 und 37, den Rollen 37 und 35, den Rollen 35 und 36 und zwischen der Rolle 36 und dem Einlauftrichter 14 frei bewegt, im Verhältnis wesentlich grösser als Fig. 1 dargestellt sein und beispielsweise das drei- bis zehnfache des Rollendurchmessers der Rollen 34 bis 37 betragen, weil auf jeder dieser Strecken mit Ausnahme der Strecke zwischen den Rollen 35 und 36 eine Änderung der Wölbung des bandförmigen Organs 17 bzw. des Bandes 7 erfolgt, und zwar zwischen der Schweissstation 31 und der Rolle 34 ein Übergang von einem ungewölbten Zustand in eine konvexe Wölbung der Bandunterseite, zwischen den Rollen 34 und 37 ein Übergang von einer konvexen in eine konkave Wölbung der Bandunterseite, zwischen den Rollen 37 und 35 ein Übergang von einer konkaven in eine konvexe Wölbung der Bandunterseite und zwischen der Rolle 36 und dem Einlauftrichter 14 ein Übergang von einer leichteren in eine stärkere konvexe Wölbung der Bandunterseite, und weil die Wölbungsänderung pro Streckeneinheit zur Vermeidung von allzu grossen Randbelastungen des gummiartigen Flachbandes 21 möglichst gering sein sollte. Durch den Übergang des Bandes 7 nach seinem Verlassen der Laufrolle 37 auf der Strecke zwischen den Rollen 37 und 35 von einer konkaven zu einer konvexen Wölbung seiner Bandunterseite wird die zum unbehinderten Einlegen der Röhrchen 10 zwischen die jeweils benachbarten Stege 9 mittels der nach aussen gewölbten Lauffläche 38 der Laufrolle 37 bewirkte Aufspreizung der jeweils benachbarten Stege 9 gegeneinander zunächst einmal auf der ersten Hälfte der Strecke zwischen den Rollen 37 und 35 wieder rückgängig gemacht und anschliessend werden die Stegleisten 23 auf der zweiten Hälfte der Strecke zwischen den Rollen 37 und 35 dann etwas zusammengebogen, so dass sich die Oberseiten der jeweils benachbarten Stege 9 aneinander annähern, wobei zunächst einmal auf der ersten Hälfte der Strecke zwischen den Rollen 37 und 35 die bei gegeneinander aufgespreizten Stegen 9 vorhandene konvexe Wölbung der Brücken 24 zwischen den jeweils benachbarten Stege 9 verschwindet und sich dadurch der Abstand der einander gegenüberliegenden Wände von jeweils benachbarten Stegen 9 in der Höhe der Brücken 24 etwas erhöht und dadurch die Abstandsverminderung dieser Wände in etwa halber Höhe der Stege 9, die sich aus dem gleichzeitig mit dem Verschwinden der konvexen Wölbung der Brücken 24 erfolgenden Rückgang der Aufspreizung der jeweils benachbarten Stege 9 gegeneinander ergibt, kompensiert wird, so dass sich zunächst einmal auf der ersten Hälfte der Strecke zwischen den Rollen 37 und 35 keine Klemmung der Röhrchen 10 zwischen den jeweils benachbarten Stegen 9 ergibt, und wobei sich dann anschliessend auf der zweiten Hälfte der Strecke zwischen den Rollen 37 und 35 eine weitere Abstandsverminderung der einander gegenüberliegenden Wände von jeweils benachbarten Stegen 9 in etwa halber Höhe der Stege ergibt, die anfangs jedoch auch noch nicht zu einer Klemmung der Röhrchen 10 zwischen den Stegen 9 führt, weil die aufgrund der Schräglage dieser Wände gegeneinander von denselben nach unten auf die Brücken 24 zu gedrückten Röhrchen 10 infolge des Verschwindens der konvexen Wölbung der Brücken 24 sowie der beginnenden konkaven Wölbung dieser Brücken zunächst noch nach unten ausweichen können, so dass sich eine Klemmung der Röhrchen 10 zwischen den jeweils benachbarten Stegen 9 erst im Endbereich der Strecke zwischen den Rollen 37 und 35 ergibt, wenn die zunächst nach unten ausgewichenen Röhrchen 10 auf den Brücken 24 aufliegen und daher nicht mehr weiter nach unten ausweichen können.

Dass die Klemmung der Röhrchen 10 zwischen den jeweils benachbarten Stegen 9 erst im Endbereich der Strecke zwischen den Rollen 37 und 35 erfolgt und auch am Ende diese Strecke sowie beim anschliessenden Passieren der Transportrolle 35 noch relativ schwach ist, ist deswegen wichtig, weil die benachbarten Stege 9 sich beim Herumschlagen des Bandes 7 um das innere Rohr 6 wie aus dem Querschnitt des Kabels 1 in Fig. 1a ersichtlich mit ihren Oberseiten bis zur Berührung derselben aneinander annähern und die sich dort dann ergebende Klemmung der Röhrchen 10 zu stark wäre, wenn sich bereits im Anfangsbereich der Strecke zwischen den Rollen 37 und 35 eine Klemmung der Röhrchen 10 zwischen den jeweils benachbarten Stegen 9 ergeben würde und dementsprechend die Klemmung der Röhrchen 10 im Endbereich dieser Strecke schon relativ stark wäre. Andererseits kann aber auch nicht zugunsten einer geringeren Klemmung der Röhrchen 10 zwischen den jeweils benachbarten Stegen 9 im fertigen Kabel 1 ganz auf die Klemmung der Röhrchen 10 zwischen den jeweils benachbarten Stegen 9 am Ende der Strecke zwischen den Rollen 37 und 35 sowie beim Passieren der Transportrolle 35 verzichtet werden, weil sich die Röhrchen 10 nach Verlassen der Transportrolle 35 beim Zusammenziehen des Bandes 7 und ihrem dadurch verursachten Übergang von einem geradlinigen in einen wellenförmigen Verlauf ohne eine solche Klemmung gegenüber der Stegleisten 23 verschieben würden und damit ein gleichmässiger wellenförmiger Verlauf der Röhrchen 10 längs des Bandes 7 mit gleichgrossen Wellen aller Röhrchen 10 zwischen jeweils aufeinanderfolgenden Stegleisten 23 und gleichgrossen Wellen jedes einzelnen Röhrchens 10 längs des Bandes 7 wie beispielsweise in der Fig. 1g ersichtlich nicht mehr gesichert wäre. Daher ist eine erst im Endbereich der Strecke zwischen den Rollen 37 und 35 beginnende Klemmung der Röhrchen 10 zwischen den jeweils benachbarten Stegen 9 wie im vorliegenden Fall eine optimale Lösung. In der Mitte der Strecke zwischen den Rollen 37 und 35, wo das Band 7 bei seinem längs dieser Strecke erfolgenden Übergang von einer konkaven zu einer konvexen Wölbung seiner Bandunterseite über einen gewissen Streckenbereich praktisch ungewölbt ist, ergibt sich die in Fig. 1f gezeigte Draufsicht auf das Band 7 in der Blickrichtung VI mit zwischen den Stegen 9 liegenden geradlinig verlaufenden Röhrchen 10 und einem sich aus der Dehnung des Bandes 7 bzw. des bandförmigen Organs 17 innerhalb des zwischen den Transportrollen 34 und 35 liegenden Dehnungsbereiches um p Prozent auf das (1+p/100)fache seiner ursprünglichen Länge ergebenden Abstand l·(1+p/100) der Stegleisten 23 vom (1+p/100)fachen der Wellenlänge l des wellenförmigen Bahnverlaufs der Bahnen 12. Dieser erhöhte Abstand der Stegleisten 23 und damit natürlich auch die Dehnung des Bandes 7 wird während des Passierens der Transportrolle 35 beibehalten, weil die sich hinter die Stege 9 des über die Transportrolle 35 laufenden Bandes 7 legenden und so das Band 7 schlupflos antreibenden Finger 33 der Transportrolle 35 natürlich in Umfangsrichtung der Transportrolle 35 den gleichen Abstand voneinander haben müssen wie die nacheinander bei der Transportrolle 35 eintreffenden Stegleisten 23, damit die Finger 33 sich jeweils unmittelbar hinter die eintreffenden Stegleisten 23 bzw. hinter die Stege 9 derselben legen können, und da die Finger 33 starr mit der Transportrolle 35 verbunden sind, muss der besagte erhöhte Abstand der Stegleisten 23 beim Eintreffen des Bandes 7 bei der Transportrolle 35 dann auch aufrechterhalten bleiben, solange das Band 7 über die Transportrolle 35 läuft. In dieser Beziehung ergibt sich also ein Unterschied in der Ausbildung der Transportrollen 34 und 35, denn während die Finger bei der Transportrolle 34 in Umfangsrichtung einen dem Abstand der Stegleisten 23 des mit diesen versehenen bandförmigen Organs 17 beim Passieren der Transportrolle 34 und damit also der Wellenlänge l des wellenförmigen Bahnverlaufs der Bahnen 12 entsprechenden Abstand haben müssen, müssen die Finger 33 der Transportrolle 35 aus den oben erläuterten Gründen in Umfangsrichtung einen dem besagten erhöhten Abstand der Stegleisten 23 beim Eintreffen bei der Transportrolle 35 vom (1+p/100)fachen der Wellenlänge l des wellenförmigen Bahnverlaufs der Bahnen 12 entsprechenden Abstand voneinander haben. Wenn also wie bei dem vorliegenden Ausführungsbeispiel bei beiden Transportrollen 35 und 34 Finger zur Vermeidung eines Schlupfes des Bandes 7 bzw. des bandförmigen Organs 17 gegenüber den Transportrollen vorgesehen sind, dann ist das Verhältnis des azimutalen Abstandes der Finger 33 bei der Transportrolle 35 zum azimutalen Abstand der Finger bei der Transportrolle 34 und damit natürlich auch das Verhältnis der Drehzahl n(1+p/100) der Transportrolle 35 zur Drehzahl n der Transportrolle 34 mit dem wegen der starren Verbindung zwischen Fingern und Transportrollen unveränderlichen Wert (1+p/100) fest vorgegeben, so dass die oben u. a. erwähnte Möglichkeit, die Bahnlänge des wellenförmigen Bahnverlaufs und damit das Verhältnis derselben zur Kabellänge bzw. die zulässige prozentuale Verlängerbarkeit des Kabels durch blosses Verstellen des Drehzahlverhältnisses von zwei die Dehnung des Bandes bewirkenden Transportrollen auf einfache Weise zu variieren, bei dem in Fig. 1 gezeigten Ausführungsbeispiel einer Einrichtung zur Herstellung des vorliegenden Kabels nicht gegeben ist. Wenn diese Möglichkeit erwünscht ist, dann müssten bei der Transportrolle 35 die Finger 33 weggelassen werden und statt dessen zur Vermeidung eines Schlupfes zwischen dem Band 7 und der Transportrolle 35 andere Massnahmen wie z. B. ein Anpressen der Stege 9 des Bandes 7 an die Transportrolle 35 mittels eines über das Band 7 gespannten, mit diesem mitlaufenden und dasselbe an die Transportrolle 35 andrückenden endlosen Laufbandes sowie gegebenenfalls zusätzlich eine Querriffelung der Lauffläche des Transportbandes 35 vorgesehen werden.

Der Antrieb der Transportrolle 35 und damit des über dieselbe laufenden Bandes 7 erfolgt mittels des in Fig. 1d ersichtlichen, schematisch als Block dargestellten Motors 48, der ebenso wie die oben schon erwähnte steuerbare Bremse bei der Transportrolle 34 in Form einer als Generator geschalteten elektrischen Maschine zweckmässig eine in diesem Fall als Motor geschaltete elektrische Maschine sein kann. Dabei können vorteilhaft für den Motor 48 bei der Transportrolle 35 und die Bremse bei der Transportrolle 34 gleiche elektrische Maschinen verwendet werden und der vom Anker der als Generator geschalteten Maschine gelieferte Generatorstrom dem Anker der als Motor geschalteten Maschine als Antriebsstrom zugeführt werden, wobei dann die Bremsleistung der als Generator geschalteten Maschine und damit auch deren Drehzahl durch Regelung des Feldstromes derselben geregelt wird und die Drehzahl der als Motor geschalteten Maschine und damit auch deren Antriebsleistung durch eine entsprechende Einstellung des Feldstromes der als Motor geschalteten Maschine eingestellt wird. Der Vorteil eines solchen Maschinenaggregats ist, dass mit der oben erwähnten Einrichtung zur Regelung der Bremsleistung und damit der Drehzahl der als Generator geschalteten Maschine mit der Längsspannung des bandförmigen Organs 17 vor Erreichen der Transportrolle 34 als Regelkriterium gleichzeitig auch die Drehzahl und damit die Antriebsleistung der als Motor geschalteten Maschine geregelt werden kann, indem mit dieser Regeleinrichtung sowohl der Feldstrom der als Generator geschalteten Maschine als auch der Feldstrom der als Motor geschalteten Maschine geregelt wird, wobei im vorliegenden Fall eines fest vorgegebenen Verhältnisses der Drehzahlen n(1+p/100) und n der beiden Transportrollen 35 und 34 ein entsprechendes festes Verhältnis der Feldströme der beiden Maschinen und im Falle der zuvor erwähnten Möglichkeit eines veränderbaren Drehzahlverhältnisses der beiden Transportrollen z. B. mit einem Stellwiderstand ein einstellbares Verhältnis der Feldströme der beiden Maschinen herzustellen ist. Ein weiterer Vorteil eines solchen Maschinenaggregats liegt darin, dass die Bremsleistung der als Generator geschalteten Maschine als Teil der Antriebsleistung der als Motor geschalteten Maschine verwendet wird und daher nicht durch voluminöse und insbesondere nur relativ langsam und nicht stetig verstellbare ohmsche Stellwiderstände in Wärme umgesetzt werden muss und sich somit bei einem solchen Maschinenaggregat eine verzögerungsfreie und stetige und daher wesentlich exaktere Regelung als bei einer Umsetzung der Bremsleistung der als Generator geschalteten Maschine in Wärme ergibt. Mit dem Verlassen der Transportrolle 35 geht das Band 7 von dem besagten Dehnungsbereich in einen Bereich mit sehr geringer Längsspannung des Bandes 7 über. Diese geringe Längsspannung wird durch eine in Fig. 1 nur schematisch angedeutete federnde Aufhängung der Umlenkrolle 36, über die das Band 7 läuft, mit relativ schwachen Zugfedern 49, deren Wirkungslinie mit der Winkelhalbierenden zwischen dem zur Rolle 36 hinlaufenden und dem von dieser weglaufenden Band 7 zusammenfällt, erzeugt, wobei das Eigengewicht der Rolle 36 bzw. die daraus resultierende Schwerkraft durch eine in Fig. 1 nicht gezeigte vertikale Pendelaufhängung der Rolle 36 aufgehoben wird. Anstelle einer solchen Kombination einer Pendelaufhängung mit der in Fig. 1 schematisch angedeuteten federnden Aufhängung der Rolle 36 durch zu beiden Seiten der Rolle 36 angeordnete Zugfedern 49 kann auch eine Lagerung der Rolle 36 auf einer schwach geneigten Gleitbahn vorgesehen werden, wobei dann die zur Gleitbahn parallele Komponente der Schwerkraft der Rolle 36 an die Stelle der Zugkräfte der Zugfedern 49 tritt und die zur Gleitbahn senkrechte Komponente der Schwerkraft der Rolle 36 durch die an die Stelle der Pendelaufhängung tretende Gleitbahn aufgehoben wird. Auch eine Lagerung der Rolle 36 auf einer waagrechten Gleitbahn in Verbindung mit Zugfedern 49 mit horizontaler Wirkungslinie wäre in diesem Sinne möglich. Mit dem genannten beim Verlassen der Transportrolle 35 erfolgenden Übergang des Bandes 7 von dem besagten Dehnungsbereich in einen Bereich mit sehr geringer Längsspannung des Bandes 7 zieht sich das Band 7 bzw. das Teil dieses Bandes 7 bildende, innerhalb des Dehnungsbereiches auf das $(1+p/100)$fache seiner ursprünglichen Länge gedehnte gummiartige Flachband 21 wieder um p Prozent auf seine ursprüngliche Länge zusammen, wobei gleichzeitig die Geschwindigkeit des Bandes 7 bzw. des Flachbandes 21 wieder sprunghaft um p Prozent auf die Geschwindigkeit des Flachbandes 21 vor Erreichen der Transportrolle 34 und damit also auf die Herstellungsgeschwindigkeit des Kabels 1 zurückgeht, die das Band 7 dann bis zum Einzug in das Kabel 1 bzw. bis zum Herumschlagen des Bandes 7 um das innere Rohr 6 und anschliessend dann zusammen mit dem hergestellten Kabel 1 innerhalb desselben beibehält. Bei dem Zusammenziehen des Bandes 7 mit Verlassen der Transportrolle 35 geht auch der Abstand der Stegleisten 23 auf dem Band 7 vom $(1+p/100)$fachen der Wellenlänge I zurück, und damit müssen die zwischen jeweils benachbarten Stegen 9 dieser Stegleisten 23 festgeklemmten Röhrchen 10 und die innerhalb derselben verlaufenden optischen Fasern 8 von ihrem geradlinigen Verlauf innerhalb des besagten Dehnungsbereiches (siehe Fig. 1f) in einen wellenförmigen Verlauf (siehe Fig. 1g) übergehen. Bei diesem Übergang von einer geradlinigen in eine Wellenform könnten sich die Röhrchen 10 nun im Prinzip in jeder beliebigen Richtung, in der sie nicht durch das Band 7 bzw. das Flachband 21 behindert werden, aufwellen, also beispielsweise in der in Fig. 1g gezeigten Richtung mit Wellen nach der einen Seite des Bandes 7 oder in der Gegenrichtung mit Wellen nach der anderen Seite des Bandes 7 oder auch mit sich vom Band 7 bzw. vom Flachband 21 nach oben abhebenden Wellen, wobei sich grundsätzlich jedes einzelne Röhrchen 10 zwischen zwei aufeinanderfolgenden Stegleisten 23 in eine andere Richtung als jedes andere Röhrchen 10 zwischen diesen beiden Stegleisten 23 aufwellen könnte, und damit das nicht geschieht sondern sich alle Röhrchen 10 wie in Fig. 1g ersichtlich in der gleichen Richtung und im wesentlichen parallel zu dem Band 7 aufwellen, sind auf der gesamten Strecke zwischen der Transportrolle 35 und der Umlenkrolle 36 oder zumindest auf einem Anfangsbereich dieser Strecke Leitbleche 50 und 51 vorgesehen, zwischen denen das Band 7 läuft und zwischen denen senkrecht zur Laufrichtung des Bandes 7 und im wesentlichen parallel zu den Leitblechen 50 und 51 ein von einem in Fig. 1 nicht gezeigten Gebläse erzeugter Luftstrom geführt wird, durch den die Aufwellung aller Röhrchen 10 in die gleiche Richtung, nämlich in die Richtung des Luftstromes, gelenkt wird.

Der Luftstrom ist bei der Einrichtung in Fig. 1 senkrecht zur Ebene des Zeichenblattes auf das Zeichenblatt zu gerichtet. Um auszuschliessen, dass sich die Röhrchen 10 oder ein Teil derselben nach Passieren des Luftstromes vom Band 7 bzw. dem Flachband 21 abheben und damit in eine zum Band 7 nicht mehr parallele Aufwellung übergehen, kann das Leitblech 51 über seine in Fig. 1 gezeigte Länge hinaus verlängert werden und über die Umlenkrolle 36 bis zum Einlauftrichter 14 geführt werden und dort dann in einen zum Einlauftrichter 14 koaxialen zweiten inneren Einlauftrichter übergehen, der kurz vor Erreichen des inneren Rohres 6 endet. Das die Transportrolle 35 verlassende Band 7 ist, wie dem in Fig. 1d gezeigten Längsschnitt durch die Transportrolle 35 in der Schnittebene IV-IV zu entnehmen ist, auf seiner nach aussen gewandten Bandunterseite konvex gewölbt, und diese Wölbung des Bandes 7 bleibt auf der Strecke zwischen der Transportrolle 35 und der Umlenkrolle 36 erhalten, weil die Lauffläche 42 der Umlenkrolle 36, wie dem in Fig. 1e gezeigten Längsschnitt durch die Umlenkrolle 36 in der Schnittebene V-V zu entnehmen ist, in gleichem Masse konkav gewölbt ist wie die Lauffläche 41 der Transportrolle 35 konvex gewölbt ist und sich daher auf der Bandunterseite des Bandes 7 beim Passieren der Umlenkrolle 36, wo die Bandunterseite innen liegt, die gleiche konvexe Wölbung wie beim Passieren der Transportrolle 35, wo die Bandunterseite aussen liegt, ergibt. Diese gleichbleibende Wölbung des Bandes 7 beim Passieren der Transportrolle 35 und dann auf der Strecke zwischen den Rollen 35 und 36 sowie beim Passieren der Umlenkrolle 36 ist zur Aufrechterhaltung der aus den oben schon genannten Gründen notwendigen Klemmung der Röhrchen 10 zwischen jeweils benachbarten Stegen 9 erforderlich. In Anpassung an diese Wölbung des Bandes 7 auf der Strecke zwischen den Rollen 35 und 36 sind auch die Leitbleche 50 und 51, zwischen denen das Band 7 läuft, entsprechend gewölbt, damit sich die Röhrchen 10 im wesentlichen nur parallel zum Band 7 aufwellen können, und das Gleiche gilt natürlich auch für die oben erwähnte mögliche Verlängerung des Leitbleches 51 über seine in Fig. 1 gezeigte Länge hinaus. Im Endbereich der Strecke zwischen den Rollen 35 und 36 ergibt sich die in Fig. 1g gezeigte Draufsicht auf das Band 7 in der Blickrichtung VII mit zwischen den Stegen 9 liegenden wellenförmig verlaufenden Röhrchen 10 und einem der Wellenlänge l des wellenförmigen Bahnverlaufs der Bahnen 12 entsprechenden Abstand der Stegleisten 23, und in dieser Form passiert das nunmehr fertige Band 7 die Umlenkrolle 36 und läuft dann in den Einlauftrichter 14 ein, wo es mit der Annäherung an den Trichtergrund mehr und mehr gewölbt und dabei um das innere Rohr 6 des Kabels 1 herumgeschlagen wird. Die Längsspannung des Bandes 7 auf der Strecke zwischen der Umlenkrolle 36 und dem Einlauftrichter 14 und damit auch die Bandgeschwindigkeit auf dieser Strecke ist aufgrund der in Fig. 1 gezeigten Anordnung der Zugfedern 49 mit einer mit der Winkelhalbierenden zwischen dem zur Rolle 36 hinlaufenden und dem von dieser weglaufenden Band 7 zusammenfallenden Wirkungslinie ebenso gross wie auf der Strecke zwischen den Rollen 35 und 36. Nach Erreichen des Trichtergrundes des Einlauftrichters 14 ist das Band 7 vollständig um das innere Rohr 6 herumgeschlagen und wird dann von dem anschliessenden zylindrischen Teil des Einlauftrichters 14 noch bis zum Extruder 15 geführt, von dem um dieses um das innere Rohr 6 herumgeschlagene Band 7 herum noch das äussere Rohr 16 extrudiert wird, womit das Kabel 1 fertiggestellt ist.

Im fertigen Kabel 1, das im Querschnitt in der Schnittebene I-I in Fig. 1a dargestellt ist, bildet der Raum zwischen dem äusseren Rohr 16 und dem inneren Rohr 6 die zylindermantelförmige Schale 13, innerhalb derer das Band 7 mit den Stegen 9 bzw. den Stegleisten 23 und den Röhrchen 10 als Führungsmitteln zur Führung der optischen Fasern 8 auf Bahnen 12 angeordnet ist, die mit Auslenkungen 52 in Umfangsrichtung der zylindermantelförmigen Schale 13 gegenüber jeweils zugeordneten, innerhalb der zylindermantelförmigen Schale 13 liegenden und zu der mit der Achse des Kabels 1 zusammenfallenden Zylinderachse 53 der Schale 13 im wesentlichen parallelen Mittellinien 11 in Kabellängsrichtung im wesentlichen wellenförmig verlaufen. Dabei weisen alle in der zylindermantelförmigen Schale 13 gelegenen Bahnen 12 untereinander gleichgrosse maximale Auslenkungen 52 in Umfangsrichtung der zylindermantelförmigen Schale 13 gegenüber den jeweils zugeordneten Mittellinien 11 auf und die Schnittpunkte 54 der in der zylindermantelförmigen Schale 13 gelegenen Bahnen 12 mit den jeweils zugeordneten Mittellinien 11 liegen in jeweils für alle Bahnen 12 gleichen Querschnittsebenen der zylindermantelförmigen Schale 13, wobei in jeder dieser Querschnittsebenen bei allen Bahnen 12 die Bahnneigungen gegenüber der jeweils zugeordneten Mittellinie 11 untereinander nach Betrag und Richtungssinn gleich sind. Die Bahnen 12 verlaufen bei dem Kabel 1 innerhalb des hohlen Innenraumes der Röhrchen 10. Die Röhrchen 10 liegen mit ihren Aufwellungen bzw. ihrem wellenförmigen Verlauf innerhalb von zylindermantelförmigen Hohlräumen 55, die innen durch das Rohr 6, aussen durch das Rohr 16 und zu beiden Seiten durch je zwei aufeinanderfolgende Stegleisten 23 begrenzt sind, und sind innerhalb dieser Hohlräume 55 frei beweglich, weil der Durchmesser der Röhrchen 10 wesentlich geringer als der Abstand der Aussenwand des inneren Rohres 6 von der Innenwand des äusseren Rohres 16 ist.

Da sich das äussere Rohr 16 über die Stege 9 auf dem inneren Rohr 6 abstützt, geht diese freie Beweglichkeit der Röhrchen 10 innerhalb der Hohlräume 55 auch an Krümmungsstellen des Kabels 1 mit starker Krümmung nicht verloren, denn eine so starke Krümmung des Kabels 1, dass der Abstand zwischen innerem Rohr 6 und äusserem Rohr 16 sich bis auf unter dem Durchmesser der Röhrchen 10 liegende Werte verringern würde und damit dann die freie Beweglichkeit der Röhrchen 10 innerhalb der Hohlräume 55 verlorenginge, ist praktisch ausgeschlossen, weil dazu im vorliegenden Fall der Krümmungsradius des Kabels 1 an der Krümmungsstelle kleiner als der Kabeldurchmesser sein müsste und solche starke Krümmungen des Kabels 1 schon aus einer ganzen Reihe anderer Gründe nicht in Betracht kommen. Da somit die freie Beweglichkeit der Röhrchen 10 innerhalb der Hohlräume 55 unter allen praktisch möglichen Umständen immer erhalten bleibt, ergibt sich an Krümmungsstellen des Kabels 1 auf der Krümmungsinnenseite eine Erhöhung und auf der Krümmungsinnenseite eine Verringerung der Amplitude des wellenförmigen Verlaufs der Röhrchen 10 und bei Temperaturänderungen des Kabels 1 im Falle von Temperaturverringerungen eine Erhöhung und im Falle von Temperaturerhöhungen eine Verringerung der Amplitude des wellenförmigen Verlaufs der Röhrchen 10. Diese Änderungen der Amplitude des wellenförmigen Verlaufs der Röhrchen 10 bei Temperaturänderungen des Kabels 1 entstehen dadurch, dass sich bei Temperaturänderungen und dadurch verursachten Längenänderungen des Kabels 1 entsprechend diesen Längenänderungen der Abstand der mit dem inneren Rohr 6 und dem äusseren Rohr 16 mechanisch gekoppelten Stegleisten 23 ändert. Die prozentuale Verlängerbarkeit des Kabels 1 ist mit p = 10% so bemessen, dass sich bei der höchsten zulässigen Temperatur des Kabels 1 an Krümmungsstellen des Kabels 1 mit der stärksten zulässigen Krümmung des Kabels 1 auf der Krümmungsaussenseite noch ein wellenförmiger Verlauf der Röhrchen 10 ergibt bzw. die Amplitude dieses wellenförmigen Verlaufes noch nicht zu Null geworden ist, so dass auch unter diesen ungünstigen Bedingungen noch eine Reserve vorhanden ist, bevor der Fall einer axialen Zugbelastung der optischen Fasern 8 und damit der Gefahr eines Zerreissens derselben eintritt. Der wellenförmige Verlauf der Röhrchen 10 ist bei dem Kabel 1 im wesentlichen sinusförmig, wobei die Röhrchen

19

10 in den Minima dieser Sinuskurve die Stegleisten 23 passieren und dort zwischen jeweils benachbarten Stegen 9 festgeklemmt sind. Die Röhrchen 10 selbst bestehen aus einem weichen elastischen Material und setzen daher einer Bewegung innerhalb der Hohlräume 55 praktisch keinerlei Widerstand entgegen. Der thermische Expansionskoeffizient dieses Materials ist etwas grösser als der der optischen Fasern 8. Die Wandstärke der Röhrchen 10 ist so bemessen, dass die Röhrchen 10 beim Passieren der Stegleisten 23 etwa die in Fig. 1a gezeigte, im wesentlichen dreieckige Querschnittsform haben und sich nicht unter Faltenbildung teilweise von den seitlichen Wänden der Stege 9 abheben und dass andererseits aber innerhalb der Röhrchen 10 auch in den Bereichen, wo die Röhrchen 10 die Stegleisten 23 passieren, noch genügend Platz für eine freie Beweglichkeit der optischen Fasern 8 verbleibt. Im Zusammenhang mit dem in Fig. 1 gezeigten Kabel 1 ist schliesslich noch zu bemerken, dass auf das äussere Rohr 16 des Kabels 1 ohne weiteres stufenweise mit im Prinzip gleichen Einrichtungen wie der in Fig. 1 gezeigten noch ein oder mehrere weitere Bänder wie das Band 7 aufgebracht und jeweils mit einem weiteren äusseren Rohr umschlossen werden können, wobei dann jeweils das äussere Rohr jedes Bandes das innere Rohr für das nächste Band bildet, dass also das Kabel 1 auch mit mehreren sich gegenseitig umschliessenden zylindermantelförmigen Schalen wie der zylindermantelförmigen Schale 13 versehen werden kann.

Abschliessend ist zur Definition der verwendeten Bezeichnungen und Begriffe noch folgendes zu sagen: Als Abstand der Stegleisten 23 ist hier, wie u. a. auch aus den Figuren 1f und 1g ersichtlich ist, der Abstand der Stegleistenmitten bezeichnet. Als Höhe der Stege 9 ist hier, wie u. a. auch die Fig. 1a in Verbindung mit diesbezüglichen obigen Ausführungen zeigt, die die Dicke des mit den Stegleisten 23 verbundenen Flachbandes 21 einschliessende Höhe in der Stegmitte bezeichnet, so dass sich also z. B. aus der Fig. 1a als Höhe der Stege 9 der Abstand zwischen der Aussenwand des inneren Rohres 6 und der Innenwand des äusseren Rohres 16 ergibt. Der Begriff «Schweissen» und die von diesem abgeleiteten Bezeichnungen und Begriffe stehen hier allgemein für eine innige Verbindung der Unterseiten der Stegleisten 23 mit dem Flachband 21 und bedingen nicht zwingend einen Schmelzvorgang an diesen Verbindungsstellen. Vielmehr könnte eine solche innige Verbindung beispielsweise auch dadurch geschaffen werden, dass die Unterseiten der Stegleisten 23 vor dem Aufsetzen auf das Flachband 21 mit einem Lösungsmittel benetzt werden, in dem sich sowohl das Material der Stegleisten 23 als auch das Material des Flachbandes 21 löst, und die «Kunststoffschweisseinrichtung» 31 könnte dann durch Hochfrequenzerhitzung ein Ineinanderfliessen der gelösten Oberflächenschichten der beiden Materialien und gleichzeitig eine Verdunstung von überflüssigem Lösungsmittel bewirken. Auch die Verwendung der häufig als «Schweisskleber» bezeichneten sogenannten Schnellklebmittel käme beispielsweise zur Schaffung einer solchen innigen Verbindung in Betracht. Der Begriff «Extruder» schliesslich umfasst hier alle Vorrichtungen, die zur Herstellung des gewünschten Extrusionsproduktes erforderlich sind. Wenn also beispielsweise das gummiartige Flachband 21 aus einem elastomeren Kunststoff besteht, der nach der eigentlichen Extrusion zur Erlangung seiner gummiartigen Eigenschaften noch einer Wärmebehandlung unterzogen bzw. vulkanisiert werden muss, dann ist die Bezeichnung «Extruder 22» so zu verstehen, dass der Block 22 neben Extrusionsmitteln auch die Vorrichtung zu der erforderlichen Wärmenachbehandlung umfasst, und Entsprechendes gilt sinngemäss auch für die anderen Extruder und insbesondere auch für den Extruder 18, mit dem die elastischen Röhrchen 10 hergestellt werden. Zu dem Begriff «gummiartig» ist in diesem Zusammenhang darauf hinzuweisen, dass dieser Begriff sich auf die physikalischen Eigenschaften des damit bezeichneten Flachbandes bezieht, dass also das Flachband in der Länge dehnbar ist und diese Dehnung entweder aufgrund der elastischen Eigenschaften des «gummiartigen» Flachbandes oder aber durch besondere Massnahmen zur Erzielung einer Schrumpfung des gedehnten Flachbandes in Kombination mit der Verwendung eines entsprechenden schrumpffähigen Materials für das Flachband nach Wegfall der die Dehnung verursachenden Zugspannung rückgängig gemacht werden kann. Der Begriff «gummiartig» schränkt das Material des damit bezeichneten Flachbandes also nicht auf Stoffe ein, die in chemischer Hinsicht als Gummi zu bezeichnen sind.

## Patentansprüche

1. Kabel zur Übertragung von Informationen mit einer Anzahl von optischen Fasern zur Signalübertragung mit Hilfe von im wesentlichen in Faserlängsrichtung geführten elektromagnetischen Strahlungen von Wellenlängen unter 1 mm, mit Führungsmitteln (7, 9, 10) zur Führung der Fasern (8) auf innerhalb von mindestens einer zylindermantelförmigen Schale (13) gelegenen Bahnen (12), die mit Auslenkungen (52) in Umfangsrichtung der zylindermantelförmigen Schale (13) gegenüber jeweils zugeordneten gedachten, innerhalb der zylindermantelförmigen Schale liegenden und zur Zylinderachse (11) in Kabellängsrichtung im wesentlichen wellenförmig verlaufen, wobei die Führungsmittel (9) so ausgebildet sind, dass diese die Bahnen (12) in Längsrichtung des Kabels (1) nur in Abständen in azimutaler Richtung festlegen und daher die Bahnen (12) in azimutaler Richtung bis zum Übergang in Gerade im wesentlichen frei beweglich sind.

2. Kabel nach Anspruch 1, dadurch gekennzeichnet, dass alle in ein und derselben zylindermantelförmigen Schale (13) gelegenen Bahnen (12) untereinander gleichgrosse maximale Auslenkungen (52) in Umfangsrichtung der zylindermantelförmigen Schale gegenüber den jeweils zugeordneten gedachten Mittellinien aufweisen, und die Schnittpunkte (54) der in dieser zylindermantelförmigen Schale gelegenen Bahnen mit den jeweils zugeordneten gedachten Mittellinien in jeweils für alle Bahnen gleichen Querschnittsebenen der zylindermantelförmigen Schale liegen und in jeder dieser Querschnittsebenen bei allen Bahnen die Bahnneigungen gegenüber der jeweils zugeordneten Mittellinie untereinander nach Betrag und Richtungssinn gleich sind.

3. Kabel nach Anspruch 1 oder 2, dadurch gekennzeichnet, dass die Bahnen in mindestens einer, vorzugsweise in allen zylindermantelförmigen Schalen zur Erzielung einer minimalen, dem Betrag nach über die gesamte Bahnlänge konstant bleibenden Bahnkrümmung von aneinandergereihten, jeweils eine Halbwelle des wellenförmigen Bahnverlaufs bildenden, untereinander gleichlangen und gleichstark gekrümmten kreisbogenförmigen Bahnstücken gebildet sind, und der Zentriwinkel der einzelnen, jeweils eine Halbwelle des wellenförmigen Bahnverlaufs bildenden kreisbogenförmigen Bahnstücke bei einer maximal möglichen Verlängerung der die Enden der Halbwelle verbindenden Mittellinie um p Prozent, vorzugsweise um einen Sicherheitsfaktor von mindestens 1,05, grösser als

$$362,3°\cdot\sqrt{1 - \sqrt{\frac{500 - p}{500 + 5p}}}$$

ist.

4. Kabel nach einem der Ansprüche 1 oder 2, dadurch gekennzeichnet, dass die Bahnen (12) in mindestens einer zylindermantelförmigen Schale (13), vorzugsweise in Schalen mit maximal möglichen Verlängerungen der Mittellinien von mehr als 10%, sinusförmig verlaufen, und das Verhältnis der Amplitude zur Wellenlänge des sinusförmigen Bahnverlaufs bei einer maximal möglichen Verlängerung der Mittellinien um p Prozent, vorzugsweise um einen Sicherheitsfaktor von mindestens 1,1, grösser als

$$0,15\cdot\frac{100+p}{100}\cdot\sqrt{1 - \frac{3}{2}(\frac{100}{100+p})^2} + \sqrt{1 - \frac{2}{4}(\frac{100}{100+p})^2}$$

ist.

5. Kabel nach einem der Ansprüche 1 bis 4, dadurch gekennzeichnet, dass jede zylindermantelförmige Schale (13) an ihrer Innenseite und ihrer Aussenseite durch je ein im wesentlichen zylindrisches Rohr (6, 16) begrenzt ist, und im Zwischenraum zwischen der Aussenwand des inneren Rohres (6) und der Innenwand des äusseren Rohres (16) Stege (9) angeordnet sind, die zu den Führungsmitteln gehören und jeweils zwischen benachbarten Bahnen (12) liegen und sich quer zur Kabellängsrichtung im wesentlichen in radialer Richtung der Schale (13) erstrecken und die durch Verbindungen (24) zwischen benachbarten Stegen (9) miteinander verbunden sind.

6. Kabel nach Anspruch 5, dadurch gekennzeichnet, dass die jeweils zwischen benachbarten Bahnen liegenden Stege ebenso wie die Bahnen in Kabellängsrichtung im wesentlichen wellenförmig verlaufen und die Höhe der Stege in den Bereichen maximaler Auslenkung der Bahnen in eine der beiden Umfangsrichtungen in bezug auf die jeweils zugeordnete Mittellinie gleich dem Abstand zwischen der Aussenwand des inneren Rohres und der Innenwand der äusseren Rohres und in allen anderen Bereichen und insbesondere auch in den Bereichen maximaler Auslenkung der Bahnen in die andere der beiden Umfangsrichtungen in bezug auf die zugeordnete Mittellinie geringer als dieser Abstand zwischen innerem und äusserem Rohr ist und die Verbindungen zwischen benachbarten Stegen in den Bereichen mit geringerer Steghöhe als dem Abstand zwischen innerem und äusserem Rohr vorzugsweise von nahe der Aussenwand des inneren Rohres oder nahe der Innenwand des äusseren Rohres angeordneten, jeweils benachbarte Stege sprossenartig miteinander verbindenden Querstäbchen gebildet sind, wobei die Steghöhe in Kabellängsrichtung vorzugsweise im wesentlichen wellenförmig um einen unter dem Abstand zwischen innerem und äusserem Rohr liegenden Mittelwert herum verläuft und sich die Maxima dieses wellenförmigen Steghöhenverlaufes in den Bereichen maximaler Auslenkung der Bahnen in die genannte eine der beiden Umfangsrichtungen und die Minima desselben in den Bereichen maximaler Auslenkung der Bahnen in die genannte andere der beiden Umfangsrichtungen in bezug auf die jeweils zugeordnete Mittellinie befinden.

7. Kabel nach Anspruch 5, dadurch gekennzeichnet, dass die jeweils zwischen benachbarten Bahnen liegenden Stege ebenso wie die Bahnen in Kabellängsrichtung im wesentlichen wellenförmig verlaufen und die Höhe der Stege über ihre gesamte Länge geringer als der Abstand zwischen der Aussenwand des inneren Rohres und der Innenwand des äusseren Rohres und vorzugsweise wenigstens annähernd konstant ist und die Stege ausser ihrem durch den wellenförmigen Verlauf der Bahnen bedingten wellenförmigen Verlauf mit Auslenkungen in Umfangsrichtung der zylindermantelförmigen Schale zusätzlich noch einen derartigen wellenförmigen Verlauf mit Auslenkungen in radialer Richtung der Schale aufweisen, dass die Stege in den Bereichen maximaler Auslenkung der Bahnen in einer der beiden Umfangsrichtungen in bezug auf die jeweils zugeordnete Mittellinie mit ihrer Innenseite auf der Aussenwand des inneren Rohres und in den Bereichen maximaler Auslenkung der Bahnen in der anderen der beiden Umfangsrichtungen in bezug auf die jeweils zugeordnete Mittellinie mit ihrer Aussenseite auf der Innenwand des äusseren Rohres aufliegen und aufgrund ihrer Eigenelastizität das innere und das äussere Rohr relativ zueinander zentrieren, wobei vorzugsweise Mittel zur Erzielung eines minimalen Reibungskoeffizienten in den Auflagebereichen der Stege auf der Aussenwand des inneren und der Innenwand des äusseren Rohres vorgesehen sind und wobei die Verbindungen zwischen benachbarten Stegen in den Bereichen, in denen die Stege nicht auf dem inneren oder äusseren Rohr aufliegen, vorzugsweise von nahe der Aussenwand des inneren Rohres oder nahe der Innenwand des äusseren Rohres angeordneten, jeweils benachbarte Stege sprossenartig miteinander verbindenden Querstäbchen gebildet sind.

8. Kabel nach Anspruch 5, dadurch gekennzeichnet, dass nur in den Bereichen maximaler Auslenkung der Bahnen (12) in eine der beiden Umfangsrichtungen in bezug auf die zugeordnete Mittellinie (11) jeweils zwischen benachbarten Bahnen Stege (9) vorgesehen sind und die Höhe dieser Stege gleich dem Abstand zwischen der Aussenwand des inneren Rohres (6) und der Innenwand des äusseren Rohres (16) ist und in allen anderen Bereichen und insbesondere auch in den Bereichen maximaler Auslenkung der Bahnen in die andere der beiden Umfangsrichtungen in bezug auf die zugeordnete Mittellinie keine Stege zwischen benachbarten Bahnen vorgesehen sind und die Stege (9) in Umfangsrichtung der zylindermantelförmigen Schale (13) durch feste Brükken (24) zwischen jeweils benachbarten Stegen (9) und in Kabellängsrichtung vorzugsweise durch ein nahe der Innenwand des äusseren Rohres (16) oder nahe der Aussenwand des inneren Rohres angeordnetes, sich in Kabellängsrichtung erstreckendes gummiartiges Band (21) aus einem hochelastischen Material miteinander verbunden sind.

9. Kabel nach einem der Ansprüche 1 bis 8, dadurch gekennzeichnet, dass die Wellenlänge (l) des wellenförmigen Bahnverlaufs im Bereich von 2 bis 20 cm, vorzugsweise von 2 bis 5 cm, liegt.

10. Kabel nach einem der Ansprüche 1 bis 9, dadurch gekennzeichnet, dass die Führungsmittel zur Führung der Fasern Röhrchen (10) umfassen, innerhalb derer die Fasern (8) verlaufen, und die Röhrchen sich längs der Bahnen (12) erstrecken.

11. Verfahren zur Herstellung eines Kabels nach einem der Ansprüche 1 bis 10, bei dem die jeweils einer zylindermantelförmigen Schale (13) zugeordneten Fasern (8) und die Führungsmittel (9, 10) zur Führung derselben auf in Kabellängsrichtung im wesentlichen wellenförmig verlaufenden Bahnen (12) in einem der betreffenden zylindermantelförmigen Schale (13) zugeordneten Band (7) zusammengefasst werden, auf dem die Bahnen (12) mit Auslenkungen in Querrichtung des Bandes (7) gegenüber jeweils zugeordneten in Längsrichtung des Bandes (7) verlaufenden Mittellinien (11) in Bandlängsrichtung im wesentlichen wellenförmig verlaufen und bei dem die Führungsmittel (9) so ausgebildet sind, dass diese die Bahnen (12) in Längsrichtung des Kabels (1) nur in Abständen in azimutaler Richtung festlegen und daher die Bahnen (12) in azimutaler Richtung bis zum Übergang in Gerade im wesentlichen frei beweglich sind, und das Band (7) derart um den den Raum innerhalb der betreffenden zylindermantelförmigen Schale (13) ausfüllenden Innenteil (3, 6) des Kabels (1) herumgeschlagen wird, dass die Bandlängsrichtung im wesentlichen mit der Kabellängsrichtung übereinstimmt.

12. Verfahren nach Anspruch 11, dadurch gekennzeichnet, dass der Innenteil (3) des Kabels (1) vor dem Aufbringen des Bandes (7) mit einem denselben (3) nach aussen begrenzenden inneren Rohr (6) versehen wird und nach dem Aufbringen des Bandes (7) auf dieses innere Rohr (6) ein weiteres, das um das innere Rohr (6) herumgeschlagene Band (7) umschliessendes äusseres Rohr (16) auf den von dem Innenteil (3, 6) des Kabels (1) mit dem inneren Rohr (6) und dem darum herumgeschlagenen Band (7) gebildeten Teil des Kabels (1) aufgebracht wird, wobei das Aufbringen des inneren (6) und des äusseren Rohres (16) vorzugsweise durch Extrusion (5, 15) und das Herumschlagen des Bandes (7) um das innere Rohr (6) vorzugsweise mittels eines das Band (7) während des Zulaufes zu dem inneren Rohr (6) nach und nach in eine im wesentlichen zylindermantelförmige Gestalt bringenden Einlauftrichters (14) erfolgt.

13. Verfahren nach Anspruch 11 oder 12, dadurch gekennzeichnet, dass das Band (7) aus einem mit Stegen (9) als Führungsmitteln versehenen bandförmigen Organ (17) und einer Vielzahl von ebenfalls als Führungsmittel dienenden Röhrchen (10), innerhalb derer die Fasern (8) verlaufen, zusammengesetzt wird und die einzelnen Röhrchen (10) hierzu jeweils zwischen benachbarte Stege (9) eingelegt werden.

14. Verfahren nach Anspruch 13, dadurch gekennzeichnet, dass als bandförmiges Organ ein Organ mit die wellenförmigen Bahnen seitlich begrenzenden, in Bandlängsrichtung ebenfalls wellenförmig verlaufenden, untereinander verbundenen Stegen verwendet wird und die Röhrchen wellenförmig in die jeweils zwischen benachbarten Stegen gebildeten Bahnen eingelegt werden.

15. Verfahren nach Anspruch 13, dadurch gekennzeichnet, dass als bandförmiges Organ (17) ein gummiartiges Flachband (21), das im entspannten Zustand in Abständen von je einer Wellenlänge (l) des wellenförmigen Bahnverlaufs mit sich jeweils über einen Bruchteil der Wellenlänge (l) erstreckenden Stegen (9) besetzt ist, verwendet wird und dieses Flachband (21) vor dem Einlegen der Röhrchen (10) zwischen die Stege (9) in Bandlängsrichtung im Verhältnis der vorgesehenen Bahnlänge des wellenförmigen Bahnverlaufs zur Kabellänge gedehnt wird und die Röhrchen (10) dann im wesentlichen geradlinig zwischen die Stege (9) eingelegt und vorzugsweise dort festgeklemmt werden und das Flachband (21) danach wieder entspannt wird, so dass die Röhrchen (10) bei der Entspannung des Flachbandes (21) von selbst den vorgesehenen wellenförmigen Bahnverlauf annehmen.

16. Verfahren nach Anspruch 15, dadurch gekennzeichnet, dass zur Besetzung des gummiartigen Flachbandes (21) mit sich über einen Bruchteil der Wellenlänge (l) erstreckenden Stegen (9) jeweils eine sich in Bandquerrichtung erstreckende Stegleiste (23) mit im Bereich der mit dem Flachband (21) verbundenen Leistenunterseite angeordneten Brücken (24) zwischen benachbarten Stegen (9) verwendet wird, die derart ausgebildet ist, dass sich beim Zusammenbiegen der Stegleiste (23) in eine im wesentlichen zylindrische Form mit der Leistenunterseite nach aussen ein einem Rohrstück ähnliches Gebilde (26) mit einem dem Querschnitt der betreffenden zylinder- mantelförmigen Schale (13) annähernd entspre- chenden Querschnitt und mit zur Aufnahme der genannten Röhrchen (10) vorgesehenen Längslöchern (43) in der Rohrwand des besagten Rohrstückes (26) von vorzugsweise die Form eines gleichseitigen Dreiecks aufweisendem Lochquerschnitt ergibt, und dass die Stegleisten (23) zum Einlegen der einzelnen Röhrchen (10) zwischen jeweils benachbarte Stege (9) mit der Leistenunterseite nach innen derart aufgebogen werden, dass sich jeweils benachbarte Stege (9) mindestens bis zur Einlegbarkeit der Röhrchen (10) zwi- schen dieselben gegeneinander aufspreizen, vor- zugsweise durch Führung des Flachbandes (21) mit den darauf angeordneten Stegleisten (23) über eine über die Bandbreite reichende oder mehrere im Bereich der Brücken (24) zwischen den Stegen (9) vorgesehene, in Bandquerrichtung konvex gekrümmte Flächen (38) und/oder Führung der Oberteile der Stege (9) in eine zur Einlegbarkeit der Röhrchen (10) zwischen die Stege (9) genügend gespreizte Lage, und dass die Röhrchen (10) nach dem Aufbiegen der Stegleisten (23) zwischen die Stege (9) eingelegt werden und die Stegleisten (23) nach dem Aufbiegen und Einlegen der Röhrchen (10) wieder in entgegengesetztem Sinn gebogen werden, vorzugsweise bis die Röhrchen (10) zwischen den Stegen (9) festgeklemmt sind, und dass das Flachband (21) mit den darauf angeordneten Stegleisten (23) und den zwischen die Stege (9) eingelegten Röhrchen (10) danach entspannt wird und die Röhrchen (10) dadurch den vorgesehenen wellenförmigen Bahnverlauf annehmen und das von Flachband (21), Stegleisten (23) und Röhrchen (10) gebildete Band (7) anschliessend mit dem Flachband (21) nach aussen um den Innenteil (3, 6) des Kabels (1) herumgeschlagen wird.

17. Verfahren nach Anspruch 16, dadurch gekennzeichnet, dass die Stegleisten (23) in zu dem besagten Rohrstück (26) zusammengebogener Form durch Extrusion (22) und scheibenweises Abtrennen (27) mit einer der Länge des besagten Rohrstückes (26) entsprechenden Scheibendicke (g) vom Extrusionsprodukt (28) hergestellt und mit dem gummiartigen Flachband (21) vorzugs- weise durch Kunststoffschweissen (31) verbun- den werden.

18. Einrichtung zur Durchführung des Verfahrens nach einem der Ansprüche 11 bis 17, mit Mitteln (2, 4, 5, 15) zum kontinuierlichen Aufbau des Kabels, die Mittel (2, 4) zur kontinuierlichen Lieferung eines Kabelkerns (3) und Extrusionsmittel (5, 15) zur Bildung von zur Kabelachse im wesentli- chen konzentrischen rohrförmigen Ummantelun- gen (6, 16) des gesamten Kabels (1) und/oder jeweils eines Teiles desselben umfassen, sowie mit Mitteln (18-20, 22, 25, 27, 29-42) zur Herstellung von mindestens einem Band (7) mit optischen Fasern (8) und Führungsmitteln (9, 10) zur Führung derselben mit Auslenkungen in Querrichtung des Bandes (7) verlaufenden Mittellinien (11) auf in Bandlängsrichtung im wesentlichen wellenförmig verlaufenden Bahnen (12), wobei die Führungsmittel (9) so ausgebildet werden, dass diese die Bahnen (12) in Längsrichtung des Kabels (1) nur in Abständen in azimutaler Richtung festlegen und daher die Bahnen (12) in azimutaler Richtung bis zum Übergang in Gerade im wesentlichen frei beweglich sind, und ferner mit Mitteln (14) zum Herumschlagen des Bandes (7) um einen im Rahmen des kontinuierlichen Aufbaus des Kabels (1) bereits aufgebauten Teil (3, 6) des Kabels (1) in eine diesen bereits aufgebauten Teil (3, 6) des Kabels (1) umgebende zylindermantelförmige Schale (13) mit einer der Kabellängsrichtung im wesentlichen übereinstimmenden Bandlängsrichtung.

19. Einrichtung nach Anspruch 18, gekennzeichnet durch einen ersten Extruder (5) zum Aufbringen eines den Kabelkern (3) ummantelnden inneren Rohres (6) auf den Kabelkern, einen in Bewegungsrichtung des Kabels bei seiner Herstellung nach dem ersten Extruder angeordneten Einlauftrichter (14), mit dem das Band (7) während seines Zulaufes zu dem herzustellenden Kabel bzw. zu dem von dem ersten Extruder (5) auf den Kabelkern (3) aufgebrachten inneren Rohr (6) nach und nach in eine das innere Rohr umgreifen- de, im wesentlichen zylindermantelförmige Ge- stalt gebracht wird, und einen in Bewegungsrichtung des Kabels bei seiner Herstellung nach dem Einlauftrichter angeordneten zweiten Extruder (15) zum Aufbringen eines den Kabelkern (3) und das diesen ummantelnde innere Rohr (6) sowie das um dieses herumgeschlagene Band (7) umschliessenden äusseren Rohres (16) auf das Kabel (1).

20. Einrichtung nach Anspruch 18 oder 19, dadurch gekennzeichnet, dass die Mittel zur Herstellung des Bandes (7) Mittel zur Herstellung eines mit Stegen (9) als Führungsmitteln versehenen bandförmigen Organs (17) und Mittel (18) zur Lieferung von Röhrchen (10), innerhalb derer die optischen Fasern (8) verlaufen, sowie Mittel zum Einlegen der Röhrchen jeweils zwischen benachbarte Stege umfassen.

21. Einrichtung nach Anspruch 20, dadurch gekennzeichnet, dass die Mittel zur Herstellung eines mit Stegen als Führungsmitteln versehenen bandförmigen Organs Prägemittel, vorzugsweise eine Prägewalze, zur Einprägung der wellenförmigen Bahnen unter gleichzeitiger Bildung von Stegen jeweils zwischen benachbarten Bahnen in ein den Prägemitteln zugeführtes Rohband aus einem verformbaren Material, vorzugsweise aus der Gruppe der thermoplastischen, elastomeren, vernetzten und unvernetzten sowie filzartigen Materialien, und Mittel, vorzugsweise Extrusionsmittel, zur Lieferung des Rohbandes umfassen und die Mittel zum Einlegen der Röhrchen jeweils zwischen benachbarte Stege Mittel zu einem wellenförmigen Einlegen sind, die vorzugsweise Mittel zur Erzeugung einer Relativbewegung in Bandquerrichtung zwischen dem bandförmigen Organ und den in dasselbe einzulegenden Röhrchen beim Einlegen derselben umfassen.

22. Einrichtung nach Anspruch 20, dadurch gekennzeichnet, dass die Mittel zur Herstellung eines mit Stegen als Führungsmitteln versehenen bandförmigen Organs Mittel, vorzugsweise Extrusionsmittel (22), zur Lieferung eines gummiartigen Flachbandes (21) und Mittel zur Lieferung von sich jeweils über einen Bruchteil der Wellenlänge des wellenförmigen Bahnverlaufs erstreckenden Stegleisten (23) mit im Bereich der Leistenunterseite angeordneten Brücken (24) zwischen benachbarten Stegen (9), vorzugsweise in Form von Extrusionsmitteln (25) zur Extrusion der Stegleisten in zu einem rohrstückartigen Gebilde (26) zusammengebogener Form sowie Abtrennmitteln (27) zum scheibenweisen Abtrennen der Stegleisten vom Extrusionsprodukt (28), sowie Mittel, vorzugsweise eine Kunststoffschweisseinrichtung (31), zum Verbinden der Stegleisten mit ihren Leistenunterseiten mit dem Flachband umfassen, und die Mittel zum Einlegen der Röhrchen jeweils zwischen benachbarte Stege Mittel zu einem im wesentlichen geradlinigen Einlegen sind und Mittel (34, 35) zum Dehnen des mit den Stegleisten besetzten gummiartigen Flachbandes im Verhältnis der vorgesehenen Bahnlänge des wellenförmigen Bahnverlaufs zur Kabellänge vor dem Einlegen sowie zum Entspannen nach dem Einlegen und ferner Mittel zum Aufbiegen der Stegleisten mit der Leistenunterseite nach innen zur Erzielung eines Aufspreizens von jeweils benachbarten Stegen gegeneinander mindestens bis zur Einlegbarkeit der Röhrchen zwischen dieselben, vorzugsweise in Form einer Laufrolle (37) für das mit den Stegleisten besetzte Flachband mit einer nach aussen gewölbten Lauffläche mit Wellentälern im Bereich der Stege und Wellenbergen im Bereich der Brücken zwischen den Stegen, umfassen.

## Claims

1. Cable for the transmission of data with a number of optical fibers for signal transmission by means of electromagnetic radiations at wave length under 1 mm which are conveyed essentially in the longitudinal sense of the fibers, with guidance means (7, 9, 10) for the guidance of the fibers (8) on paths (12) located in the inside of at least one cylinder-jacket-shaped shell (13), said path running in the longitudinal sense of the cable essentially in the form of waves with excursions (52) in the circumferential direction of the cylinder-jacket-shaped shell (13) in reaction to attributed imaginary median lines (11) lying within the cylinder-jacket-shaped shell and being essentially in parallel to the cylinder axis (53) thereof, said guidance means (9) being formed so that they fix the paths (12) in the longitudinal sense of the cable (1) only with distances in azimuthal direction and that therefore the paths being essentially freely movable in azimuthal direction up to the transition into straight lines.

2. Cable as in claim 1, characterized in that all paths (12) located in one and the same cylinder-jacket-shaped shell (13) follow uniformly-sized maximum excursions (52) in the circumferential direction of the cylinder-jacket-shaped shell (13) in relation to the respectively assigned, imaginary median lines and in that the points of intersection (54) of the paths inside the cylinder-jacket-shaped shell with the imaginary median line attributed to each are located in the cross-sectional planes, identical for all of the paths, of the cylinder-jacket-shaped shell and in that the path inclination with respect to the median line attributed to each is uniform for all path inclinations as to degree and orientation in all of these cross-sectional planes and for all paths.

3. Cable as in claim 1 or 3, characterized in that the paths are constituted by equally long and equally bent path sections in the form of arcs of circles following each other, in at least one, preferably in all of the cylinder-jacket-shaped shells for the obtention of a minimal path curvature which remains constant in degree throughout the entire path length, each of these path curves being in the shape of a half wave of the wave-shaped path, and in that the centering angle of the individual arc-of-circle path sections, each of which constitutes a half wave of the wave-shaped path, is larger by least p percent, preferably by a safety factor of at least 1.05 than

$$362,3° \cdot \sqrt{1 - \sqrt{\frac{500 - p}{500 + 5p}}}$$

4. Cable as in one of the claims 1 or 2, characterized in that the paths (12) run sinus-shaped in at least one cylinder-jacket-shaped shell (13), preferably in shells with maximum possible prolongations of the median line of more than 10%, and in that the ratio of the amplitude to the wave length of the sinus-shaped path course is preferably larger by a safety factor of at least 1.1 than

$$0,15 \cdot \frac{100+p}{100} \cdot \sqrt{1 - \frac{3}{2}(\frac{100}{100+p})^2 + \sqrt{1 - \frac{2}{4}(\frac{100}{100+p})^2}}$$

5. Cable as in one of the claims 1 to 4, characterized in that each cylinder-jacket-shaped shell (13) is bounded on its inside and on its outside by two essentially cylindrical pipes (6, 16) and in that fixed links (9) are installed in the space between the outer wall of the inner pipe (6) and the inner wall of the outer pipe (16), said fixed links being part of the guidance means and being located each between adjoining paths (12), extending transversely to the longitudinal direction of the cable, essentially in radial direction of the shell (13), and being connected to each other by connections (24) between adjoining fixed links (9).

6. Cable as in claim 5, characterized in that each of the fixed links lying between adjoining paths also assumes an essentially wave-shaped course, as do the paths, in the longitudinal direction of the cable and in that the height of the fixed links, in one of the two circumferential directions with respect to the median line attributed to each, is equal to the distance between the outer wall of the inner pipe and the inner wall of the outer pipe and is smaller than this distance between inner and outer pipe in all other areas, and especially also in the areas of maximum excursion of the path in the other one of the two circumferential directions with respect to the attributed median line and in that the connections between adjoining fixed links in the areas in which the fixed link height is less than the distance between inner and outer pipe consist preferably of small cross-rods located near the outer wall of the inner pipe or near the inner wall of the outer pipe, each connecting adjoining fixed links in a spoke-like manner, whereby the fixed link height in the longitudinal direction of the cable preferably follows an essentially wave-shaped course around a median value which is less than the distance between the inner and the outer pipe, whereby the maximum values of this wave-shaped course of the fixed link height are situated in the areas of maximum path excursion into the one, mentioned circumferential directions of the two, while the minimum values of said course are situated in the areas of maximum path excursion in the other, mentioned circumferential direction with respect to the median line assigned to each.

7. Cable as in claim 5, characterized in that each of the fixed links lying between adjoining paths also assumes an essentially wave-shaped course, as do the paths, in the longitudinal direction of the cable and in that the height of the fixed links, over their entire length, is less than the distance between the outer wall of the inner pipe and the inner wall of the outer pipe and preferably at least nearly constant and in that the fixed links, in addition to their wave-shaped course dictated by the wave-shaped course of the paths, with excursions in the circumferential direction of the cylinder-jacket-shaped shell additionally assume such a wave-shaped course with excursions in radial direction of the shell that the fixed links rest with their inner side on the outer wall of the inner pipe in one of the two circumferential directions with respect to the median line attributed to each, and rest with their outer side on the inner wall of the outer pipe in the areas of maximum path excursion in the other one of the two circumferential directions with respect to the median line attributed to each, in that they center the inner and the outer pipe in relation to each other as a result of their intrinsic elasticity, whereby means are preferably provided for the attainment of a minimal friction coefficient in the areas in which the fixed links rest on the outer wall of the inner pipe and on the inner wall of the outer pipe and whereby the connection between adjoining fixed links, in the areas in which said fixed links do not rest on the inner or outer pipe, are constituted by small cross-rods, connecting adjoining fixed links in a spoke-like manner, located near the outer wall of the inner pipe or near the inner wall of the outer pipe.

8. Cable as in claim 5, characterized in that fixed links (9) are provided only in the areas of maximum excursion of the paths (12) in one of the two circumferential directions with respect to the attributed median line (11), each between adjoining paths, and in that the height of these fixed links is equal to the distance between the outer wall of the inner pipe (6) and the inner wall of the outer pipe (16) and in that no fixed links are provided between adjoining paths in any of the other areas, and in particular not in the areas of maximum path excursion in the other one of the two circumferential directions with respect to the attributed median line, in that the fixed links (9) are connected to each other by solid bridges (24) between each adjoining pair of fixed links in the circumferential direction of the cylinder-jacket-shaped shell (13) and in that they are preferably connected to each other in the longitudinal direction of the cable by a rubber-like band (21) located near the inner wall of the outer pipe (16) or near the outer wall of the inner pipe, said band extending in the longitudinal direction of the cable and consisting of a highly elastic material.

9. Cable as in one of the claims 1 to 8, characterized in that the wavelength (l) of the wave-shaped course of the path lies within the range of 2 to 20 cm, preferably of 2 to 5 cm.

10. Cable as in one of the claims 1 to 9, characterized in that the guidance means for the guidance of the fibers comprise small tubes (10) within which the fibers (8) run, and in that the small tubes extend along the paths (12).

11. Process for the production of a cable as in one of the claims 1 to 10, wherein all the fibers (8) attributed to one cylinder-jacket-shaped shell (13) and the guidance means (9, 10) for the guidance of said fibers on paths (12) taking an essentially wave-shaped course in the longitudinal direction of the cable are gathered together in a band (7) assigned to one of the cylinder-jacket-shaped shells (13) concerned on which the paths (12) assume an essentially wave-shaped course with excursions in the transversal direction of the band (7) in relation to the median lines (11) attributed to the bands in the longitudinal direction, and wherein the guidance means (9) being formed so that they fix the paths (12) in the longitudinal sense of the cable (1) only with distances in azimuthal direction and that therefore the paths being essentially freely movable in azimuthal direction up to the transition into straight lines, and wherein the band (7) is wrapped around the space within the inner part (3, 6) of the cable (1) which fills the cylinder-jacket-shaped shell (13) concerned in such a manner that the longitudinal direction of the band essentially coincides with the longitudinal direction of the cable.

12. Process as in claim 11, characterized in that the inner part (3) of the cable (1) is provided with an inner pipe (6) which bounds said inner part (3) before the band (7) is installed and in that an additional outer pipe (16), enclosing the band (7) wrapped around the inner pipe (6) is installed on that part of the cable (1) which is constituted by the inner part (3) of the cable with the inner pipe (6) and the band (7) which is wrapped around it, whereby the installation of the inner pipe (6) and the outer pipe (16) is effected preferably by extrusion (5, 15) and wrapping of the band (7) around the inner pipe (6) preferably by means of a feeding funnel (14) which gradually imparts the shape of a cylinder jacket to the band (7) as it is fed to the inner pipe (6).

13. Process as in claim 11 or 12, characterized in that the band (7) is constituted by a band-shaped element (17) provided with fixed links (9) as guidance means and by a multitude of small tubes (10), also serving as guidance means, within which the fibers (8) are running, and in that each individual small tube (10) is inserted between adjoining fixed links (9) for that purpose.

14. Process as in claim 13, characterized in that an element with interconnected fixed links which laterally bound the wave-shaped paths and which also follow a wave-shaped course in the longitudinal band direction is used as the band-shaped element, and in that the small tubes are inserted along a wave-shaped course into the paths constituted between each pair of adjoining fixed links.

15. Process as in claim 13, characterized in that a rubber-like flat band (21) is used as the band-shaped element (17), said flat band being provided with fixed links (9) when it is in a relaxed state, said fixed links being at intervals equal to one wavelength (l) each of the wave-shaped course of the paths, each of these fixed links extending over a fraction of the wavelength (l), in that this flat band (21) is stretched in proportion to the planned path length of the wave-shaped path course to the length of the cable before the insertion of the small tubes (10) between the fixed links (1) in longitudinal band direction and in that the small pipes (10) are then essentially inserted in a straight line between the fixed links (9) and are preferably held there by clamping, the flat band (21) then being relaxed again so that the small tubes (10) assume the planned, wave-shaped path course by themselves as the flat band (21) is relaxed.

16. Process as in claim 15, characterized in that a fixed link rail (23) extending transversely to the band, with bridges (24) located in the area of the underside of the rail which is connected to the flat band (21) is used between each pair of adjoining fixed links (9) to edge the rubber-like flat band with fixed links extending over a fraction of the wavelength (l), said fixed link rail (23) being designed so that when it is bent together into an essentially cylindrical form with the rail underside on the outside there results a configuration (26) similar to a piece of pipe, with cross-section approaching the cross-section of the corresponding cylinder-jacket-shaped shell (13) and with oblong recesses (43) having cross-sections preferably in the form of an equilateral triangle in the pipe wall of said piece (26) of pipe to accept the above-mentioned small tubes (10), and in that the fixed link rails (23) are bent up with the underside of the rail to the inside for the insertion of the individual small tubes (10) between each pair of adjoining fixed links (9) in such a manner that adjoining fixed links (9) are spread apart at least sufficiently so that the small tubes (10) can be inserted between them, preferably by feeding the flat band (21) with the fixed link rails (23) attached to it in a sufficiently spread-out position for the insertion of the small tubes (10) between the fixed links (9), over a surface and/or guide for the upper portion of the fixed links which reaches over the width of the band or over several such surfaces (38) and/or guides provided in the area of the bridges (24) between the rails, convexly bent in the transversal direction of the band, whereby the small pipes (10) are inserted between the fixed link rails (23) are bent back into the opposite direction after being bent up and after insertion of the small tubes (10), preferably until the small tubes (10) are clamped fast between the fixed links (9), and whereby the flat band (21) with the fixed link rails (23) upon it and with the small tubes (10) inserted between the fixed links (9) is then released so that the small tubes (10) assume the planned, wave-shaped course of the path as a result and so that the band (7), constituted by the flat band (21), the fixed link rails (23) and the small tubes (10) is then wrapped around the inner portion (3, 6) of the cable (1), with the flat band (21) on the outside.

17. Process as in claim 16, characterized in that the fixed link rails (23) are produced in the above-mentioned bent-together form of a piece (26) of pipe by extrusion (22) and separation (27) by disks, the disk thickness of the extrudate (28) being equal to the length of said piece (26) of pipe, and in that said fixed link rails are combined with the rubber-like flat band (21) through plastic welding (31).

18. Device to carry out the process as in one of the claims 11 to 17, with means (2, 4, 5, 15) for the continuous build-up of the cable, comprising means (5, 15) for the formation of the pipe-shaped shells (6, 16) encompassing the entire cable (1) and/or parts thereof which are essentially concentric with respect to the axis of the cable, and with means (18-20, 22, 25, 27, 29-42) for the production of at least one band (7) with optical fibers (8) and guidance means (9, 10) to guide them with excursions in the transversal direction of the band (7) with respect to median lines (11) attributed to each band and running in the longitudinal sense of the band (7) in essentially wave-shaped paths (12), said guidance means (9) being formed so that they fix the paths (12) in the longitudinal sense of the cable (1) only with distances in azimuthal direction and that therefore the paths being essentially freely movable in azimuthal direction up to the transition into straight lines, and with means (14) for wrapping the band (7) around a portion (3, 6) of the cable (1) previously built up within the framework of continuous cable built-up so as to produce a cylinder-jacket-shaped shell (13) surrounding this already built-up portion of the cable, the longitudinal sense of the band essentially coinciding with the longitudinal sense of the cable.

19. Device as in claim 18, characterized by a first extruder (5) to apply an inner pipe (6) surrounding the cable core (3) to said cable core (3), by a feeding funnel (14) installed after the first extruder in the sense of cable movement during its manufacture by means of which the band (7) is gradually brought into an essentially cylinder-jacket-shaped form which surrounds the inner pipe as it is fed to the cable being manufactured or to the inner pipe (6) applied by the first extruder

26

(5) to the cable core (3), and characterized by a second extruder (15) installed after the feeding funnel in the sense of cable movement during its manufacture to apply an outer pipe (16) to the cable (1), said outer pipe surrounding the cable core (3) and the inner pipe (6) surrounding it as well as the band (7) wrapped around the latter.

20. Device as in claim 18 or 19, characterized in that the means for the manufacture of the band (7) comprise means for the manufacture of a band-shaped element (17) with fixed links (9) serving as guidance means and means (18) for the supply of small tubes (10) in the interior of which run the optical fibers (8), as well as means for the insertion of the small tubes between each pair of adjoining fixed links.

21. Device as in claim 20, characterized in that the means for the manufacture of a band-shaped element provided with fixed links serving as guidance means comprise embossing means, preferably an embossing roll to emboss the wave-shaped paths while at the same time forming fixed links between each pair of adjoining paths onto a band blank made of a ductile material, preferably of the group of thermoplastic, elastomer, cross-linked or not cross-linked as well as felt-like materials and comprise means, preferably extrusion means, for the supply of the band blank and further characterized in that the means for the insertion of the small tubes between each pair of adjoining fixed links are means for a wave-shaped insertion which preferably comprise means for the production of a relative movement in the transversal direction of the band between the band-shaped element and the small tubes to be inserted into it while said small tubes are being inserted.

22. Device as in claim 20, characterized in that the means for the manufacture of a band-shaped element with fixed links serving as guides comprise means, preferably extrusion means (22) for the supply of a rubber-like flat band (21) and means for the supply of fixed link rails (23) each of which extends over a fraction of the wave length of the wave-shaped course of the path, with bridges (24) between adjoining fixed links (9) provided in the area of the underside of the rails, preferably in the form of extrusion means (25) for the extrusion of the fixed link rails in configured so as to be bent together into shape like a piece of pipe (26) as well as separating means (27) to separate the fixed link rails on their rail underside to the flat band and in that the means for the insertion of the small tubes between each pair of adjoining fixed links are means for an essentially straight-line insertion and comprise means (34, 35) for stretching the rubber-like flat band with its fixed link rails at the ratio of the planned path length of the wave-shaped course of the path to the cable length before the insertion and for the release after insertion, and furthermore means to bend up the fixed link rails with the rail underside on the inside, in order to obtain spreading of all adjoining fixed links away from each other until the small tubes can be inserted between them, preferably in the form of a track roller (37) for the flat band with the fixed link rails, having a running surface convex toward the outside and, suitably, an additional running surface with wave valleys transversal to the running direction in the area of the fixed links with wave peaks in the area of the bridges between the fixed links.

## Revendications

1. Câble pour la transmission d'informations avec un certain nombre de fibres optiques pour la transmission des signaux à l'aide de rayonnements électromagnétiques de longueurs d'ondes inférieures à 1 mm guidés sensiblement dans la direction longitudinale des fibres avec des moyens de guidage (7, 9, 10) pour le guidage des fibres (8) sur des voies (12) disposées à l'intérieur d'au moins une enveloppe (13) en forme de gaine cylindrique, qui s'étendent sensiblement sous forme ondulée dans la direction longitudinale du câble avec des déviations (52) dans la direction périphérique de l'enveloppe (13) sous forme de gaine cylindrique par rapport à des lignes médianes (11) imaginaires associées disposées à l'intérieur de l'enveloppe sous forme de gaine cylindrique et sensiblement parallèles à l'axe cylindrique (53) de celle-ci, les moyens de guidage (9) étant constitués de telle façon qu'ils fixent les voies (12) en direction longitudinale du câble (1) seulement de distance en distance en direction azimutale et qu'ainsi les voies (12) sont sensiblement librement mobiles en direction azimutale jusqu'à la transition en une ligne droite.

2. Câble selon la revendication 1, caractérisé en ce que toutes les voies (12) disposées dans une seule et unique enveloppe (13) en forme de gaine cylindrique présentent des déviations (52) maximales de même taille entre elles en direction périphérique de l'enveloppe en forme de gaine cylindrique par rapport aux lignes médianes imaginaires associées, et les points d'intersection (54) de ces voies disposées dans cette enveloppe en forme de gaine cylindrique avec les lignes médianes imaginaires associées à chaque fois se trouvent à chaque fois dans des plans transversaux de l'enveloppe en forme de gaine cylindrique identiques pour toutes les voies, et dans chacun de ces plans transversaux, les inclinaisons des voies par rapport à la ligne médiane associée à chaque fois sont identiques entre elles pour toutes les voies en ce qui concerne la valeur et l'orientation.

3. Câble selon la revendication 1 ou 2, caractérisé en ce que, dans au moins une enveloppe, de préférence dans toutes les enveloppes en forme de gaine cylindrique, pour l'obtention d'une courbure des voies minimale et restant constante en ce qui concerne la valeur sur toute la longueur des voies, les voies sont formées par des tronçons de voie en forme d'arc de cercle de même courbure et de même longueur les uns par rapport aux autres disposés à la suite les uns des autres et formant chaque fois une demi-ondulation de la disposition ondulée des voies, l'angle au centre des différents tronçons de voie en forme d'arc de cercle formant

27

chaque fois une demi-ondulation de la disposition ondulée des voies étant supérieur à

$$362,3° \cdot \sqrt{1 - \sqrt{\frac{500 - p}{500 + 5p}}}$$

pour un allongement le plus grand possible de la ligne médiane reliant les extrémités de la demi-ondulation de p pour cent, de préférence d'un facteur de sécurité d'au moins 1,05.

4. Câble selon l'une des revendications 1 ou 2, caractérisé en ce que les voies (12) s'étendent de façon sinusoïdale dans au moins une enveloppe (13) en forme de gaine cylindrique, de préférence dans des enveloppes avec des prolongements les plus grands possibles des lignes médianes supérieurs à 10%, et en ce que le rapport de l'amplitude à la longueur d'ondulation de la disposition des voies sous forme sinusoïdale pour un allongement maximal des lignes médianes de p pour cent, de préférence d'un facteur de sécurité d'au moins 1,1, est supérieur à

$$0,15 \cdot \frac{100+p}{100} \cdot \sqrt{1 - \frac{3}{2}(\frac{100}{100+p})^2} + \sqrt{1 - \frac{2}{4}(\frac{100}{100+p})^2}$$

5. Câble selon l'une des revendications 1 à 4, caractérisé en ce que chaque enveloppe (13) en forme de gaine cylindrique est limitée au niveau de son côté interne et de son côté externe à chaque fois par un tube (6, 16) sensiblement cylindrique et en ce que dans l'espace entre la paroi externe du tube interne (6) et la paroi interne du tube externe (16) sont disposées des traverses (9), qui appartiennent aux moyens de guidage et qui se trouvent à chaque fois entre des voies (12) voisines et qui s'étendent transversalement par rapport à la direction longitudinale du câble sensiblement en direction radiale par rapport à l'enveloppe (13), et qui sont reliées entre elles par des liaisons (24) entre des traverses (9) voisines.

6. Câble selon la revendication 5, caractérisé en ce que les traverses situées à chaque fois entre des voies voisines s'étendent de façon sensiblement ondulée dans la direction longitudinale du câble de même que les voies et que la hauteur des traverses dans les zones de déviation maximale des voies est égale à la distance entre la paroi externe du tube interne et la paroi interne du tube externe dans l'une des deux directions périphériques par rapport à la ligne médiane associée à chaque fois, et est plus petite que cette distance entre le tube interne et le tube externe dans toutes les autres zones et en particulier également dans les zones de déviation maximale des voies dans l'une des deux directions périphériques par rapport à la ligne médiane associée, et que les liaisons entre des traverses voisines dans les zones de hauteur de traverse plus faible que la distance entre le tube interne et le tube externe sont constituées de préférence par des bâtonnets transversaux reliant entre elles chaque fois à la manière d'échelons les traverses voisines, disposés à proximité de la paroi externe du tube interne ou à proximité de la paroi interne du tube externe, la hauteur de traverse s'étendant dans la direction longitudinale du câble, de préférence essentiellement sous forme ondulée autour d'une valeur moyenne située sous la distance entre le tube interne et le tube externe et les maxima de cette disposition de hauteurs de traverse sous forme ondulée se situant dans les zones de déviation maximale des voies dans l'une des deux directions périphériques et les minima de la même se situant dans les zones de déviation maximale des voies dans l'autre des deux directions périphériques par rapport à la ligne médiane associée à chaque fois.

7. Câble selon la revendication 5, caractérisé en ce que les traverses situées à chaque fois entre des voies voisines s'étendent sensiblement de façon ondulée dans la direction longitudinale du câble de même que les voies, et que la hauteur des traverses sur leur longueur globale est plus faible que la distance entre la paroi externe du tube interne et la paroi interne du tube externe et de préférence est au moins approximativement constante et que les traverses, outre leur disposition ondulée déterminée par la disposition ondulée des voies avec des déviations dans la direction périphérique de l'enveloppe en forme de gaine cylindrique, présentent en outre encore une disposition ondulée de ce type avec des déviations en direciton radiale de l'enveloppe, que les traverses reposent par leur côté interne sur la paroi externe du tube interne dans les zones de déviation maximale des voies dans l'une des deux directions périphériques par rapport à la ligne médiane associée à chaque fois et par leur côté externe sur la paroi interne du tube externe dans les zones de déviation maximale des voies dans l'autre des deux directions périphériques par rapport à la ligne médiane associée à chaque fois et, du fait de leur élasticité propre, centrent le tube interne et le tube externe l'un par rapport à l'autre, des moyens pour obtenir un coefficient de frottement minimal dans les zones d'appui des traverses sur la paroi externe du tube interne et sur la paroi interne du tube externe étant de préférence prévus et les liaisons entre des traverses voisines dans les zones dans lesquelles les traverses ne reposent pas sur le tube interne ou externe sont de préférence formées par des bâtonnets transversaux reliant entre elles à la manière d'échelons les traverses voisines à chaque fois, disposés à proximité de la paroi externe du tube interne ou à proximité de la paroi interne du tube externe.

8. Câble selon la revendication 5, caractérisé en ce que des traverses (9) sont prévues à chaque fois entre des voies voisines seulement dans les zones de déviation maximale des voies (12) dans l'une des deux directions périphériques par rapport à la ligne médiane (11) associée et en ce que la hauteur de ces traverses est égale à la paroi interne du tube externe (16) et en ce que dans toutes les autres zones et en particulier également dans les zones de déviation maximale des voies dans l'autre des deux directions périphériques par rapport à la ligne médiane associée, aucune traverse entre les voies voisines n'est prévue et en ce que les traverses (9) dans la direction périphérique de l'enveloppe (13) en forme de gaine cylindrique sont reliées entre elles par des ponts (24) solides entre des traverses (9) voisines à chaque fois et dans la direction longitudinale du câble de préférence par une bande (21) de type caoutchouc en un matériau hautement élastique s'étendant dans la direction longitudinale du câble et disposée à proximité de la paroi interne du tube externe (16) ou à proximité de la paroi externe du tube interne.

9. Câble selon l'une des revendications 1 à 8, caractérisé en ce que la longueur d'ondulation (I) de la disposition ondulée des voies se situe dans le domaine de 2 à 20 cm, de préférence de 2 à 5 cm.

10. Câble selon l'une des revendications 1 à 9, caractérisé en ce que les moyens de guidage pour le guidage des fibres comportent des petits tubes (10) à l'intérieur desquels s'étendent les fibres (8), les petits tubes s'étendant le long des voies (12).

11. Procédé pour la fabrication d'un câble selon l'une des revendications 1 à 10, dans lequel les fibres (8) associées à chaque fois à une enveloppe (13) en forme de gaine cylindrique et les moyens de guidage (9, 10) pour leur guidage sur des voies (12) disposées de façon sensiblement ondulée dans la direction longitudinale du câble sont réunies dans une bande (7) associée à l'enveloppe (13) en forme de gaine cylindrique concernée, sur laquelle bande les voies (12) s'étendent de façon sensiblement ondulée dans la direction longitudinale de la bande (7) avec des déviations en direction transversale de la bande (7) par rapport à des lignes médianes (11) associées à chaque fois s'étendant dans la direction longitudinale de la bande (7) et dans lequel les moyens de guidage (9) sont conformés de telle façon que ceux-ci fixent les voies (12) en direction longitudinale du câble (1) seulement de distance en distance dans la direction azimutale et que de ce fait les voies (12) sont sensiblement librement mobiles dans leur direction azimutale jusqu'à la transition en ligne droite, et en ce que la bande (7) est enroulée autour de la partie interne (3, 6) du câble (1) remplissant l'espace à l'intérieur de l'enveloppe (13) en forme de gaine cylindrique concernée de telle façon que la direction longitudinale de la bande coïncide sensiblement avec la direction longitudinale du câble.

12. Procédé selon la revendication 11, caractérisé en ce que la partie interne (3) du câble (1) est munie d'un tube interne (6) la limitant vers l'extérieur avant l'application de la bande (7) puis, après application de la bande (7) sur ce tube interne (6), un autre tube externe (16) entourant la bande (7) enveloppant le tube interne (6) est appliqué sur la partie du câble formée par la partie interne (3, 6) du câble (1) avec le tube interne (6) et la bande (7) enveloppée autour, l'application du tube interne (6) et du tube externe (16) se faisant de préférence par extrusion (5, 15) et l'enveloppement de la bande (7) autour du tube interne (6) se faisant de préférence au moyen d'une trémie d'entrée (14) fournissant la bande (7) au cours de l'amenée au tube interne (6) progressivement sensiblement sous une forme de gaine cylindrique.

13. Procédé selon la revendication 11 ou 12, caractérisé en ce que la bande (7) est assemblée à partir d'un organe (17) en forme de bande muni de traverses (9) en tant que moyens de guidage et d'une pluralité de petits tubes (10) servant également de moyens de guidage, à l'intérieur desquels sont disposées les fibres (8), les différents petits tubes (10) étant à cet effet disposés chacun entre des traverses (9) voisines.

14. Procédé selon la revendication 13, caractérisé en ce que, en tant qu'organe en forme de bande, il est utilisé un organe avec des traverses reliées les unes aux autres limitant latéralement les voies ondulées et s'étendant elles-mêmes de façon ondulée dans la direction longitudinale de la bande, les petits tubes étant disposés de façon ondulée dans les voies formées à chaque fois entre les traverses voisines.

15. Procédé selon la revendication 13, caractérisé en ce qu'en tant qu'organe (17) en forme de bande est utilisée une bande plate (21) du type caoutchouc qui, à l'état détendu, est occupée suivant des distances à chaque fois d'une longueur d'ondulation (I) de la disposition des voies de forme ondulée par des traverses (9) qui s'étendent à chaque fois sur une fraction de la longueur d'ondulation (I), cette bande plate (21) étant ensuite étendue dans la direction longitudinale de la bande dans le rapport de la longueur de voie prévue de la disposition ondulée des voies à la longueur du câble avant le placement des petits tubes (10) entre les traverses (9), et les petits tubes (10) étant ensuite disposés de façon sensiblement rectiligne entre les traverses (9) et étant de préférence bloqués et la bande plate (21) étant ensuite de nouveau détendue, de sorte que les petits tubes (10) épousent d'eux-mêmes la disposition ondulée prévue des voies lors de la détente de la bande plate (21).

16. Procédé selon la revendication 15, caractérisé en ce que, pour l'occupation de la bande plate (21) de type caoutchouc par les traverses (9) s'étendant sur une fraction de la longueur d'ondulation (I), on utilise à chaque fois un rebord de traverse (23) s'étendant transversalement par rapport à la bande avec des ponts (24) entre les traverses voisines (9) disposés dans le domaine du côté inférieur des traverses relié à la bande plate (21), qui sont constitués de telle façon que, lors de la courbure du rebord de traverse (23) en une forme sensiblement cylindrique avec le côté inférieur du rebord vers l'extérieur, un corps (26) analogue à un tronçon de tube se forme avec une section correspondant approximativement à la section de l'enveloppe (13) en forme de gaine cylindrique concernée et avec des trous oblongs (43) prévus pour la réception des petits tubes (10) cités dans la paroi de tube dudit tronçon de tube (26) d'une section de trou présentant de façon avantageuse la forme d'un triangle équilatéral, les rebords de traverse (23) pour la disposition des différents petits tubes (10) à chaque fois entre des traverses (9) voisines avec le côté inférieur du rebord vers l'intérieur étant courbés de telle façon que les traverses (9) voisines s'élargissent l'une contre l'autre au moins jusqu'à la possibilité d'installation des petits tubes (10), de préférence par guidage de la bande plate (21) avec les rebords de traverse (23) disposés dessus sur une surface et/ou guidage de la partie supérieure des traverses (9) s'étendant au-dessus de la largeur de la bande ou sur plusieurs surfaces et/ou guidages des parties supérieures de traverses (9) courbées de façon convexe transversalement par rapport à la bande et prévus dans le domaine des ponts (24) entre les traverses (9) en une position suffisamment élargie pour pouvoir disposer les petits tubes (10) entre les traverses (9), et en ce que les petits tubes (10) sont disposés entre les traverses (9) après la courbure des rebords de traverse (23) et les rebords de traverse (23) sont de nouveau courbés en sens contraire après la courbure et la disposition des petits tubes (10), de préférence jusqu'à ce que les petits tubes (10) soient bloqués entre les traverses (9), et en ce que la bande plate (21) avec les rebords de traverse (23) disposés dessus et les petits tubes (10) disposés entre les traverses (9) est ensuite détendue et les petits tubes (10) épousent de ce fait la disposition ondulée prévue des voies, et la bande (7) formée par la bande plate (21), les rebords de traverse (23) et les petits tubes (10) est alors enroulée avec la bande plate (21) vers l'extérieur autour de la partie interne (3, 6) du câble (1).

17. Procédé selon la revendication 16, caractérisé en ce que les rebords de traverse (23) sont fabriqués à partir du produit d'extrusion (20) sous forme courbée en ledit tronçon de tube (26) par extrusion (22) et séparation (27) par plaques avec une épaisseur de plaque (g) correspondant à la longueur dudit tronçon de tube (26), et sont reliés à la bande plate (21) du type caoutchouc, de préférence par soudure (31) de matière plastique.

18. Dispositif pour la mise en œuvre du procédé selon l'une des revendications 11 à 17, avec des moyens (2, 4, 5, 15) pour la formation en continu du câble, qui comportent des moyens (2, 4) pour la production continue d'une âme de câble (3) et des moyens d'extrusion (5, 15) pour la formation d'enveloppes (6, 16) tubulaires et sensiblement concentriques à l'axe du câble total (1) et/ou à chaque fois d'une partie de celui-ci, ainsi qu'avec des moyens (18-20, 22, 25, 27, 29-42) pour la fabrication d'au moins une bande (7) avec des fibres optiques (8) et des moyens de guidage (9, 10) pour le guidage de celles-ci avec des déviations en direction transversale de la bande (7) par rapport chaque fois à des lignes médianes (11) associées s'étendant dans la direction longitudinale de la bande (7) sur des voies (12) s'étendant de façon sensiblement ondulée dans la direction longitudinale de la bande, les moyens de guidage (9) étant constitués de telle façon qu'ils fixent les voies (12) dans la direction longitudinale du câble (1) seulement de distance en distance en direction azimutale et qu'ainsi les voies (12) sont sensiblement librement mobiles en direction azimutale jusqu'à la transition en ligne droite, et en outre avec des moyens (14) pour envelopper la bande (7) autour d'une partie (3, 6) du câble (1) déjà construite dans le cadre de la construction en continu du câble (1) dans une enveloppe (13) en forme de gaine cylindrique entourant cette partie (3, 6) déjà construite du câble (1) avec une direction longitudinale de la bande correspondant sensiblement à la direction longitudinale du câble.

19. Dispositif selon la revendication 18, caractérisé par une première extrudeuse (5) pour appliquer un tube interne (6) entourant l'âme du câble (3) sur l'âme du câble, une trémie d'entrée (14) disposée après la première extrudeuse dans la direction de déplacement du câble lors de sa fabrication, avec laquelle la bande (7), au cours de son arrivée, est amenée au câble à fabriquer ou au tube interne (6) appliqué sur l'âme du câble (3) par la première extrudeuse (5), progressivement sous une forme sensiblement de gaine cylindrique entourant le tube interne, et par une deuxième extrudeuse (15) disposée après la trémie d'entrée dans la direction de déplacement du câble lors de sa fabrication pour l'application sur le câble (1) d'un tube externe (16) entourant l'âme du câble (3) et le tube interne (6) entourant celle-ci ainsi que la bande (7) l'enveloppant.

20. Dispositif selon la revendication 18 ou 19, caractérisé en ce que les moyens pour la fabrication de la bande (7) comportent des moyens pour la fabrication d'un organe (17) sous forme de bande muni de traverses (9) en tant que moyens de guidage et des moyens (18) pour la production de petits tubes (10) à l'intérieur desquels s'étendent les fibres optiques (8), de même que des moyens pour disposer les petits tubes à chaque fois entre les traverses voisines.

21. Dispositif selon la revendication 20, caractérisé en ce que les moyens pour la fabrication d'un organe en forme de bande muni de traverses en tant que moyens de guidage comprennent des moyens d'impression, de préférence un cylindre d'impression, pour l'impression des voies ondulées avec formation simultanée de traverses à chaque fois entre des voies voisines dans une bande brute en un matériau déformable amené au moyen d'impression, de préférence du groupe des matériaux thermoplastiques, élastomères, réticulés et non réticulés de même que des matériaux de type feutre, et des moyens, de préférence des moyens d'extrusion, pour délivrer la bande brute, les moyens pour disposer les petits tubes à chaque fois entre les traverses voisines étant alors des moyens pour opérer une disposition ondulée, qui comportent de préférence des moyens pour produire un mouvement relatif en direction transversale par rapport à la bande entre l'organe sous forme de bande et les petits tubes à disposer dans celui-ci lors de la disposition de ceux-ci.

22. Dispositif selon la revendication 20, caractérisé en ce que les moyens pour fabriquer un organe sous forme de bande muni de traverses en tant que moyens de guidage comportent des moyens, de préférence des moyens d'extrusion (22) pour la production d'une bande plate (21) du type caoutchouc et des moyens pour la production de rebords de traverse (23) s'étendant à chaque fois sur une fraction de la longueur d'ondulation de la disposition ondulée des voies, avec des ponts (24) entre les traverses voisines (9) disposés dans le domaine du côté inférieur du rebord, de préférence sous forme de moyens d'extrusion (25) pour l'extrusion des rebords de traverse sous une forme recourbée en un corps (26) analogue à un tronçon de tube, de même que des moyens de séparation (27) pour la séparation sous forme de plaques des rebords de traverse du produit d'extrusion (28), ainsi que des moyens, de préférence un dispositif de soudure de matière plastique (31), pour relier les rebords de traverse par leurs côtés inférieurs de rebord à la bande plate, les moyens pour disposer les petits tubes à chaque fois entre les traverses voisines étant des moyens pour une disposition sensiblement rectiligne et des moyens (34, 35) pour étendre la bande plate du type caoutchouc occupée par les rebords de traverse dans le rapport de la longueur de voie prévue de la disposition ondulée des voies à la longueur du câble avant le placement ainsi que pour la détente après le placement et en outre des moyens pour courber les rebords de traverse avec le côté inférieur des rebords vers le bas pour obtenir un écartement l'une contre l'autre à chaque fois de traverses voisines au moins jusqu'à la possibilité de placer les petits tubes entre celles-ci, de préférence sous forme d'un galet de roulement (37) pour la bande plate occupée par les rebords de traverse avec une surface de roulement cintrée vers l'extérieur et en outre de façon appropriée ondulée transversalement par rapport à la direction de roulement avec des creux d'ondulation dans le domaine des traverses et des sommets d'ondulation dans le domaine des ponts entre les traverses.

EP 0 248 935 B1

Fig. 1